# EUROPÄISCHE PATENTSCHRIFT

(11) **EP 4 088 851 B1**
(45) Veröffentlichungstag und Bekanntmachung des Hinweises auf die Patenterteilung: **20.08.2025**
(21) Anmeldenummer: 21000133.5
(22) Anmeldetag: 12.05.2021
(51) Int. Cl.: B23K 9/095, B23K 9/12, B23K 9/127, B23K 9/235

(54) **VERFAHREN ZUR DETEKTION VON STELLEN EINER FÜGELINIE ZWISCHEN BAUTEILEN SOWIE FÜR EIN NACHFOLGENDES SCHWEISSVERFAHREN DAZU**
METHOD FOR DETECTING POINTS OF A JOINT BETWEEN COMPONENTS AND FOR A SUBSEQUENT WELDING PROCESS
PROCÉDÉ DE DÉTECTION DES EMPLACEMENTS D'UNE LIGNE D'ASSEMBLAGE ENTRE COMPOSANTS, AINSI QUE PROCÉDÉ DE SOUDAGE ULTÉRIEUR

(43) Veröffentlichungstag der Anmeldung: 16.11.2022
(73) Patentinhaber: SKS Welding Systems GmbH, 67661 Kaiserslautern (DE)
(72) Erfinder: KLEIN, Thomas, 67688 Rodenbach (DE)
(74) Vertreter: Mooser, Sebastian Thomas

(56) Entgegenhaltungen:
- EP-B1- 3 016 773
- WO-A1-2019/002141
- DE-A1- 102019 127 385
- DE-A1- 2 847 169
- DE-U1- 29 816 729
- JP-A- 2013 056 353

## Beschreibung

Die Erfindung betrifft ein Verfahren zum Bestimmen eines von einem Mehrachsenroboter abzufahrenden Schweißwegs für einen nachfolgenden Lichtbogenschweißvorgang mittels einer Lichtbogenschweißanlage, bei dem zwischen zumindest zwei Werkstücken entlang einer Fügelinie zwischen den zumindest zwei Werkstücken eine Schweißnaht erzeugt werden soll, wobei ein zur nachfolgenden Ausführung des Lichtbogenschweißvorgangs vorgesehener und vom Mehrachsenroboter geführter Lichtbogenschweißbrenner in zumindest einem Detektionsverfahrschritt automatisiert über zumindest eines der Werkstücke geführt wird, um Informationen über einen Ist-Verlauf der Fügelinie zu ermitteln.

Es existieren eine Vielzahl von unterschiedlichen Schweißverfahren. Die vorliegende Erfindung hat besondere Bedeutung für das Lichtbogenschweißen. Dieses basiert auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform aus beiden zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am Ende des Schweißbrenners zum Zielmetallstück transportiert.

Bei Anlegen einer elektrischen Spannung am Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstandenen Tropfen des Schweißdrahtes oder durch Übergabe des Tropfens im Kurzschluss auf die verflüssigte Stelle der Zielmetallstücke sowie deren nachfolgenden Abkühlen werden diese miteinander verbunden.

Die Erfindung richtet sich zudem vor allem an automatisierte Lichtbogenschweißprozesse, bei denen mittels eines im dreidimensionalen Raum beweglichen Mehrachsenroboters der Lichtbogenschweißbrenner geführt wird, um einen üblicherweise vorbestimmten Schweißweg entlang einer Fügelinie abzufahren und hierbei eine Schweißnaht zu erzeugen. In den meisten Fällen wird die Schweißnaht zwischen zwei Werkstücken erzeugt und der Schweißbrenner entlang aneinanderstoßenden Kanten der beiden Werkstücke geführt. Hierbei besteht die Schwierigkeit, daß trotz Werkstückspannvorrichtungen sich Ungenauigkeiten in Bezug auf den vorbestimmten Weg des Schweißbrenners und der dazu relativen Anordnung der Werkstücke ergeben können, wie auch durch Werkstücktoleranzen. Da der Mehrachsenroboter mit dem Lichtbogenschweißbrenner einen vorprogammierten Schweißweg abfährt, können derartige Ungenauigkeiten Einfluß auf die Qualität der erzeugten Schweißnähte haben. Es wird deshalb bei automatisierten Schweißprozessen stets priorisiert angestrebt derartige Ungenauigkeiten oder Abweichungen zu vermeiden, damit der Schweißbrenner möglichst exakt im Bereich des Stoßes bzw der tatsächlich vorhanden Fügelinie zwischen den beiden Werkstücken geführt werden kann.

So ist beispielsweise aus der WO2019/002141 A1 ein Verfahren bekannt geworden, bei dem der Schweißbrenner mit der Schweißdrahtspitze hämmernd über die beiden aneinanderstoßenden und miteinander zu verbindenden Werkstücke geführt wird, wobei der Verfahrweg senkrecht zum Sollverlauf der vorgesehenen Schweißnaht verläuft. Zur Steigerung der Messgenauigkeit soll der gleiche Meßweg zumindest abschnittsweise mehrfach abgefahren werden. An diesem Verfahren kann als nachteilig empfunden werden, daß zur Erzielung einer höheren Meßgenauigkeit der Verfahrweg mehrmals zumindest abschnittsweise abgefahren werden muß, was zusätzliche Zeit in Anspruch nimmt, in welcher die Schweißanlage nicht produktiv ist. Zudem kann befürchtet werden, daß die hämmernde Bewegung der Schweißdrahtspitze einer hohen Genauigkeit des Verfahrens hinderlich sein könnte.

Aus der DE 298 16 729 U1 ist ein Verfahren gemäß dem Oberbegriff des Anspruchs 1 bekannt.

Der Erfindung liegt deshalb die Aufgabe zugrunde ein Verfahren zum Bestimmen eines von einem Schweißroboter abzufahrenden Schweißwegs der eingangs genannten Art zu schaffen, das mit vergleichsweise geringem Aufwand eine hohe Genauigkeit erzielt.

Diese Aufgabe wird bei einem Verfahren der eingangs genannten Art erfindungsgemäß durch die Merkmale von Patentanspruch 1 gelöst. Erfindungsgemäß kann somit vorgesehen sein, daß der Schweißbrenner mit seinem Schweißdraht im zumindest einen Detektionsverfahrschritt von einer Ausgangsstelle der Oberfläche eines der Werkstücke bis zur Fügelinie für die vorgesehene Schweißnaht zumindest im wesentlichen nicht-parallel zu einem Soll-Verlauf der Fügelinie mit - bezogen auf die Schweißdrahtlängsachse - durchgehend gleicher relativer axialer Position der Schweißdrahtspitze zum Lichtbogenschweißbrenner über die Oberfläche des Werkstücks von einem Mehrachsenroboter geführt wird, um durch Detektion einer Änderung der relativen axialen Position der Schweißdrahtspitze zum Lichtbogenschweißbrenner auf eine Stelle der Fügelinie zu schließen.

Der Erfindung liegt der Gedanke zugrunde, daß eine Veränderung der Position der Schweißdrahtspitze relativ zum Schweißbrenner als Indikator dafür dienen kann, daß die Schweißdrahtspitze beim zumindest einen Verfahrdetektionsschritt auf die Fügelinie zwischen den beiden nachfolgend miteinander zu verschweißenden Werkstücken gestossen ist. Hierzu kann der Lichtbogenschweißbrenner zusammen mit der aus ihm herausragenden Schweißdrahtspitze über zumindest eines der Werkstücke geführt werden, insbesondere mit hierbei konstant unveränderten Kontaktverhältnissen zwischen der Schweißdrahtspitze und dem Werkstück. Bei Erreichen der Fügelinie kann insbesondere aufgrund des hier vorhandenen Höhenunterschieds zwischen den beiden Werkstücken oder aufgrund eines Spalts zwischen den beiden Werkstücken oder aufgrund eines Auftreffens auf das andere Werkstück eine Veränderung der relativen Position der Schweißdrahtspitze zum Lichtbogenschweißbrenner, insbesondere zu dessen Kontaktdüse, eintreten. Diese Änderung kann sich beispielsweise in einer veränderten Länge des Abschnitts des Schweißdrahts zeigen, mit dem dieser aus dem Lichtbogenschweißbrenner herausragt. Erfindungsgemäß sollte somit vorzugsweise eine vorbestimmte Länge dieses Abschnitts eingestellt und anschließend werden, wobei detektiert werden kann, ob sich eine Änderung dieser relativen Position der Schweißdrahtspitze zum Lichtbogenschweißbrenner ergibt. Eine Änderung der relativen Position kann dabei entweder eine Verkürzung oder eine Verlängerung des aus dem Schweißbrenner herausragendem Drahtabschnitts sein.

In einer bevorzugten Weiterbildung der Erfindung kann auch der Gedanke zum Tragen kommen, daß mit konstanten Kontaktverhältnissen des Schweißdrahts mit einem Werkstück, das zu den miteinander zu verbindenden Bauteilen gehört und über das der Schweißdraht geführt wird, der Übergang von dem einen zum anderen Bauteil besonders genau feststellbar ist. In vielen Fällen existiert beim Übergang vom einen zum anderen Werkstück ein Höhenunterschied oder ein Spalt, wodurch aufgrund dieses Übergangs auch hier eine Längenänderung des aus dem Schweißbrenner herausragenden Drahtabschnitts stattfindet. Da der Schweißdraht durch die Drahtvorschubeinrichtung geführt ist und dort mit Antriebsrollen in Eingriff steht, kann diese Längenänderung beispielsweise zu einer nicht motorisch angetriebenen, passiven Rotationsbewegung von Komponenten der Drahtvorschubeinrichtung führen. Diese Verschiebebewegung des Drahts oder eine durch die Drahtbewegung veranlasste 'Rotationsbewegung zumindest einer der Anlagenkomponenten kann von einer Steuerung der Lichtbogenschweißanlage und/oder einer Robotersteuerung als Detektionsereignis für ein Erreichen der Schweißdrahtspitze an der Fügelinie interpretiert werden. Im Gegensatz zu einer alternierenden Auf- und Abbewegung des Schweißdrahts während der Verfahrbewegung in Richtung auf die Fügelinie, wie dies aus dem Stand der Technik bekannt ist, kann bei einer Verfahrbewegung mit dabei konstanten Kontaktverhältnissen während der Verfahrbewegung, beispielsweise einer schleifenden Bewegung, davon ausgegangen werden, daß die Wahrscheinlichkeit höher ist, daß die Schweißdrahtspitze exakt beim Erreichen der Fügelinie sich axial in Längsachsenrichtung des Schweißdrahts bewegt und somit ein besonders genaues Detektionsergebnis erreicht wird. Dieses Detektionsergebnis für eine Stelle der nachfolgend zu erzeugenden Schweißnaht ist damit auch einer Stelle, über welche der Schweißbrenner mit seiner Schweißdrahtspitze beim nachfolgenden Schweißvorgang zu führen ist.

In einer bevorzugten Ausführungsform der Erfindung erfolgt als weiterer Detektionsverfahrschritt ein Abfahrvorgang von zumindest eines zweiten Wegs über zumindest eines der Werkstücke, der sich vom ersten abgefahren Weg unterscheidet. Auch der zumindest zweite Weg sollte über eine Soll-Stelle der zu erzeugenden Schweißnaht, jedoch eine andere Soll-Stelle als beim ersten Abfahrvorgang, mit wiederum konstant eingehaltenen Kontaktverhältnissen bezüglich der Oberfläche geführt werden. Konstante Kontaktverhältnisse können dabei insbesondere eine durchgehend schleifende Bewegung über eine Oberfläche eines Werkstücks oder aber auch eine kontaktlose Bewegung über die Oberfläche sein. Auch beim zweiten Verfahrweg wird die Schweißdrahtspitze am Übergang vom einen Werkstück zum anderen Werkstück, eine axiale Längsbewegung zeigen. Diese Längsbewegung kann wiederum in der Drahtvorschubeinrichtung detektiert und als Detektionsereignis genutzt werden, um eine weitere Stelle des Ist-Verlaufs der zu erzeugende Schweißnaht zu ermitteln. Mittels zwei Ist-Stellen des Verlaufs der Fügelinie kann zumindest bei einem geradlinigen Verlauf der zu erzeugenden Naht deren Ist-Verlauf bestimmt werden. Gleiches gilt für einen geradlinigen Verlauf eines Abschnitts einer zu erzeugenden Naht, auch dessen Soll-Verlauf kann mit zumindest zwei mit Abstand zueinander angeordnete detektierte Stellen der Fügelinie bestimmt werden. Hierbei gilt, je weiter die beiden Stellen voneinander beabstandet sind, desto genauer lässt sich der Ist-Verlauf der zu erzeugenden Naht bestimmen. Im Zusammenhang mit der Erfindung ist es bevorzugt, wenn jeder der Verfahrwege von Detektionsverfahrschritten nur einmal abgefahren wird, was zu einer besonders schnellen Ermittlung des IST-Verlaufs der Fügelinie führt. Auch wenn dies bevorzugt ist, so gehören aber auch Ausführungsformen zur Erfindung, bei denen zumindest einer der Verfahrwege von Detektionsverfahrschritten mehrfach, beispielsweise zweifach, abgefahren wird.

Eine Detektion einer Längenänderung des Schweißdrahts kann auf verschiedene Weise erfolgen und auf unterschiedlichen Wirkprinzipien basieren. Vorzugsweise kann eine mechanische oder eine elektrische Zustandsänderung oder Auswirkung in der Drahtvorschubeinrichtung detektiert und genutzt werden. Erreicht der Schweißdraht eine Fuge, Spalt oder einen Absatz am Übergang vom ersten zum zweiten Werkstück, dann verliert der Schweißdraht den mechanischen Kontakt zum ersten Werkstück und/oder stößt gegen das zweite Werkstück. Beides kann zu einer Verschiebung des Schweißdrahts relativ zum Schweißbrenner und zur Drahtvorschubeinrichtung führen. Entweder wird der Schweißdraht in den Schweißbrenner hineingeschoben, oder aber ein in Vorschubrichtung vorbelasteter Schweißdraht kann ein Stück weit aus dem Schweißbrenner herausgeschoben werden Beides kann insbesondere mit Mitteln der Drahtvorschubeinrichtung festgestellt und von der Steuerung, insbesondere der Robotersteuerung, die räumlichen Koordinaten, beispielsweise X-Y-Z-Koordinaten, der Stelle abgespeichert werden, an welcher die Längenänderung stattfindet. Durch den bereits erörterten Verfahrweg von zumindest einem zweiten Detektionsverfahrschritts kann auf gleicher Weise, beispielsweise durch Detektierung eines Beginns einer Rotationsbewegung einer Komponente der Drahtvorschubeinrichtung, festgestellt werden, ob eine Veränderung der relativen Position der Schweißdrahtspitze zum Lichtbogenschweißbrenner bzw. eine Bewegung des Schweißdrahts stattfindet. Dies kann wiederum als ein Erreichen einer Stelle der Fügelinie durch die Schweißdrahtspitze detektiert bzw. interpretiert werden. Auch hier sollte die Steuerung die räumlichen Koordinaten dieser Stelle abspeichern, an welcher insbesondere eine Bewegung, wie beispielsweise eine Rotationsbewegung, einer Komponente der Drahtvorschubeinrichtung stattfindet und festgestellt wird. Bei jedem der möglichen Detektionsverfahrschritte kann alternativ auch die Bewegung des Schweißdrahts direkt detektiert werden. Bei einem geradlinigen Verlauf der zu erzeugenden Schweißnaht kann mit den beiden ermittelten Koordinaten der Ist-Verlauf der Fügelinie des Schweißbrenners ermittelt und nachfolgend ausgeführt werden.

Im Zusammenhang mit der Erfindung kann es auch bevorzugt sein, daß die Steuerung erst ab einem bestimmten Mindestwert einer Veränderung der relativen Position der Schweißdrahtspitze bezüglich des Schweißbrenners bzw ab einem Mindestwert einer bestimmten Länge einer Längsbewegung des Schweißdrahts auf eine Auftreffen auf die Fügelinie schließt. Hierdurch kann vermieden werden, daß durch mögliche unbeabsichtigte Bewegungen der Schweißdrahtspitze, beispielsweise aufgrund von Oberflächenungenauigkeiten des Werkstücks, hierdurch von der Steuerung irrtümlich auf die Fügelinie geschlossen wird. Alternativ oder ergänzend kann auch eine mögliche Geschwindigkeit ds/dt der Bewegung des Schweißdrahts als Indikator für ein Erreichen der Fügelinie durch die Schweißdrahtspitze vorgesehen sein. Auch hier kann in vorteilhafterweise die Steuerung erst bei Erreichen bzw. bei Überschreiten eines bestimmten Mindestwerts/Schwellwerts, hier der Geschwindigkeit des Schweißdrahts relativ zum Schweißbrenner, die Detektion einer solchen Geschwindigkeit als Detektionsergebnis für ein Erreichen Fügelinie durch die Schweißdrahtspitze genutzt werden. Unabhängig von der verwendeten physikalischen Größe werden bei solchen erfindungsgemäßen Ausführungsformen Werte, die kleiner sind als der jeweils vorgesehene Grenzwert, nicht als Indikator für ein Erreichen der Fügelinie interpretiert. Die Steuerung löst aufgrund solcher Werte keine Aktion aus.

In einer weiteren bevorzugten Ausführungsform der Erfindung kann vorgesehen sein, daß beim Abfahren des zumindest einen Ermittlungswegs eines Detektionsverfahrschritts ein Motor einer Drahtvorschubeinrichtung der Lichtbogenschweißanlage auf den Schweißdraht Druck, insbesondere ununterbrochen Druck, in Vorschubbewegungsrichtung ausübt, durch welchen der Schweißdraht gegen das jeweilige Werkstück gedrückt wird. Hierdurch kann ein sicherer Kontakt der Schweißdrahtspitze mit der Oberfläche der jeweiligen Werkstücke erzielt werden. Außerdem kann hiermit die Funktionssicherheit und Genauigkeit der Detektierung der gesuchten Stelle des Absatzes, der Fuge, des Spalts oder Stosses, an welchem die Schweißnaht erzeugt werden soll, gesteigert und Fehlmessungen verhindert werden.

In einer weiteren bevorzugten alternativen Ausführungsform des erfindungsgemäßen Verfahrens kann vorgesehen sein, daß eine Steuerung der Lichtbogenschweißanlage die Drahtvorschubeinrichtung während der Ausführung des Abfahrens eines Ermittlungswegs, der auch Verfahrweg bezeichnet werden kann, überwacht, um eine Rotationsbewegung zu detektieren und insbesondere bei Überschreiten eines Schwellwerts der Änderung eines Rotationswinkels auf eine Stelle des Ist-Verlaufs des Schweißwegs bzw auf die Fügelinie zu schließen. Die Robotersteuerung sollte dann diese ermittelten Koordinaten der genannten Stelle zur Korrektur des Ist-Verlaufs in Bezug auf den Soll-Verlauf des nachfolgend auszuführenden Schweißwegs abspeichern und verwenden.

Bei dieser, bei zuvor beschriebenen und bei weiteren Ausführungsformen der Erfindung kann somit die Drahtvorschubeinrichtung, die eigentlich zur Bewegung des Schweißdrahts bei der Ausführung des Schweißprozeßes vorgesehen ist, als einer Art Detektionseinrichtung eingesetzt und damit ihre Funktionalität erweitert werden. Eine weitere Möglichkeiten hierfür besteht darin, daß der zumindest eine Motor der Drahtvorschubeinrichtung derart bestromt wird, daß er ein geringes Drehmoment auf den Schweißdraht in Vorschubrichtung ausübt, wodurch die Schweißdrahtspitze gegen die Oberfläche des zumindest einen abzufahrenden Werkstücks gedrückt wird. Dieser Andruck besteht vor allem während zumindest eines Teilabschnitts der Ausführung des Verfahrwegs eines Detektionsverfahrschritts mittels des Schweißbrenners. Sobald der Schweißdraht an die Stelle gelangt, an welcher der Übergang vom einen zum anderen Werkstück stattfindet, wobei hier aufgrund des Übergangs insbesondere ein Absatz, eine Fuge, ein Spalt oder ein Stoss vorhanden ist, findet durch das von der Drahtvorschubeinrichtung auf den Schweißdraht ausgeübte Drehmoment eine Vorschubbewegung des Schweißdrahts statt. Die Schweißdrahtspitze hat zumindest kurzzeitig keinen Kontakt zu den Werkstücken mehr, die Schweißdrahtspitze ist dadurch nicht mehr von einem der Werkstücke blockiert, wodurch die von der Drahtvorschubeinrichtung ausgeübte Vorschubkraft zu einer Vorschubbewegung des Schweißdrahts führt. Hierdurch rotieren Komponenten der Drahtvorschubeinrichtung, wie zumindest eine Antriebsrolle und der Elektromotor um jeweils einen gewissen Rotationswinkel, was wiederum messbar und detektierbar ist. Der Eintritt dieses Ereignisses kann somit als das Erreichen einer Stelle der Fügelinie bzw der nachfolgend durch einen Schweißprozeß auszuführenden Schweißnaht gewertet werden. Die Steuerung speichert somit die räumlichen Koordinaten dieser Stelle ab und verwendet sie zur Korrektur oder zur Neuberechnung des Verlaufs der Fügelinie.

Auch im Zusammenhang mit diesen Ausführungsformen der Erfindung können in vorteilhafter Weise weitere Detektionsverfahrschritte, zumindest jedoch ein weiterer Detektionsverfahrschritte, abgefahren werden. Hierbei wird, ebenfalls bevorzugt, das gleiche Verfahren wie bei der Ausführung des ersten Detektionsverfahrschritt angewendet. Der zumindest eine weitere Detektionsverfahrschritt ist vorzugsweise nicht identisch mit dem ersten oder einem anderen bereits ausgeführten Detektionsverfahrschritts. Der Weg des zumindest einen weiteren Detektionsverfahrschritts sollte den Sollverlauf des Schweißwegs mit Abstand zur Schnittstelle des ersten Detektionsverfahrschritts schneiden, damit zumindest ein zweiter Vergleichs- und gegebenenfalls Korrekturwert mit bzw für den Sollverlauf zur Verfügung steht. Auch beim zumindest einen weiteren Detektionsverfahrschritt kann somit eine Bewegung des Schweißdrahts relativ zum Schweißbrenner und damit eine Bewegung, insbesondere eine Rotation, von zumindest einer Komponente der Drahtvorschubeinrichtung, als Detektion der Stelle verwendet werden, an welcher entlang des jeweiligen Detektionsverfahrschritts ein Übergang vom einen zum anderen Werkstück stattfindet.

Im Zusammenhang mit diesen Ausführungsformen der Erfindung kann es vorteilhaft sein, daß die Steuerung erst bei Überschreiten eines vorbestimmten oder vorbestimmbaren Mindestwerts einer Verschiebelänge des Schweißdrahts, auf den Übergang vom ersten zum zweiten Werkstück schliesst. 'Dadurch, daß eine Mindestlänge vorausgesetzt wird, können Fehldetektierungen, beispielsweise von Oberflächenungenauigkeiten der Werkstücke, besser vermieden und damit die Funktionssicherheit erhöht werden. Vorzugsweise wird als Schwellwert eine bestimmte Mindestlängenänderung in einem bestimmten Zeitintervall vorgesehen.

Zur Steigerung der Genauigkeit des erfindungsgemäßen Verfahrens kann dieses in bevorzugter Weise einen Teach-In Schritt umfassen. Der Teach-In Schritt , der vor der Ausführung eines Detektionsverfahrschritts ausgeführt werden sollte, kann ein Kürzen des aus dem Lichtbogenschweißbrenner herausragenden Schweißdrahtendes umfassen. Eine solche Kürzung kann unter anderem deshalb vorteilhaft sein, weil die Drahtspitze durch zuvor erfolgte Schweißprozesse eine undefinierte Form und eine undefinierte relative Position zum Schweißbrenner aufweisen kann. Zum Kürzen kann ein Kürzungswerkzeug vorgesehen sein, das sich relativ zum Schweißdraht an einer Referenzstelle des Schweißbrenners, insbesondere einem Tool-Center-Point (TCP) befindet. Durch Kürzen des Schweißdrahts mittels des Kürzungswegzeugs, wie beispielsweise eine automatisiert betätigte Drahtschere, die sich an einer Referenzstelle befindet, wird eine neue Drahtspitze geschaffen, die sich ebenfalls exakt an der Referenzstelle befindet. Wird diese Position der neu geschaffenen Schweißdrahtspitze als Referenz für den nachfolgend ausgeführten zumindest einen Detektionsverfahrvorgang genutzt, kann eine besonders hohe Genauigkeit der ermittelten Koordinaten der Übergangsstellen zwischen den zumindest zwei Werkstücken erreicht werden.

Es kann somit erfindungsgemäß bevorzugt sein, daß nach dem Kürzen des Schweißdrahts mehrere nicht-parallele Detektionswege mit der Drahtspitze schleifend oder mit anderen möglichst konstant und unverändert eingehaltenen Kontaktverhältnissen auf oder über dem zumindest einen Werkstück manuell gesteuert abgefahren und dabei die Koordinaten der vorgesehenen Detektionswege in der Steuerung für ein nachfolgendes automatisiertes Abfahren der Detektionswege abgespeichert werden.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine perspektivische Darstellung einer bevorzugten Ausführungsform einer erfindungsgemäßen Lichtbogenschweißeinrichtung;
- Fig. 2: eine Detaildarstellung eines Lichtbogenschweißbrenner aus Fig. 1, mit Sicht auf einen in den Lichtbogenschweißbrenner integrierten Teil einer Drahtvorschubeinrichtung;

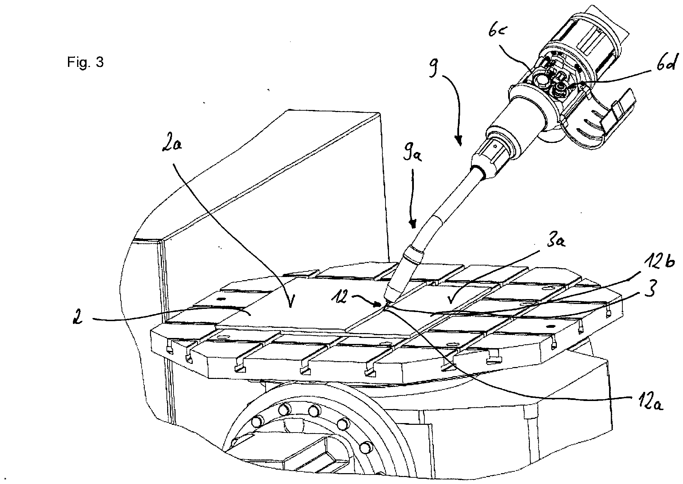

- Fig. 3: eine Detaildarstellung von zwei in ihrer Bearbeitungsposition teilweise überlappend angeordneten Blechen sowie einer geschnittenen Darstellung des Lichtbogenschweißbrenners aus Fig. 1;
- Fig. 4: eine stark schematisierte Darstellung eines vorderen Teils eines Lichtbogenschweißbrenners mit einer Deformation der Schweißdrahtspitze;
- Fig. 5: eine Darstellung eines Referenzierungsvorgangs, bei dem durch Abtrennen eines Drahtendabschnitts eine im TCP befindliche Schweißdrahtspitze erzeugt wird;
- Fig. 6: einen Verfahrensabschnitt, bei dem der Schweißbrenner sowie das aus dem Schweißbrenner herausragende Schweißdrahtende um einen Winkel α geneigt werden;
- Fig. 7: ein Verfahrensabschnitt, bei dem der Schweißbrenner auf ein Oberblech abgesenkt und die Schweißdrahtspitze mit einer Oberfläche des Oberblechs in Kontakt gebracht und ein Vorschubbewegung des Lichtbogenschweißbrenners in Richtung auf die Fügelinie bei ständigem Kontakt der Schweißdrahtspitze mit der Oberfläche begonnen wird;
- Fig. 8: ein Verfahrensabschnitt, bei dem die mit der Oberfläche in ständigem Kontakt befindliche Schweißdrahtspitze eine Stelle der Fügelinie erreicht;
- Fig. 9: ein Verfahrensabschnitt, bei die Schweißdrahtspitze das Oberblech verlassen hat, sich über dem Unterblech befindet und der Schweißdraht vorgeschoben wird, bis die Schweißdrahtspitze Kontakt mit dem Unterblech erzielt;
- Fig. 10: ein Diagramm, in dem ein Drehmomentverlauf M eines Antriebsmotors der Drahtvorschubeinrichtung sowie ein Längsbewegungsverlauf Δs der Schweißdrahtspitze in Abhängigkeit der momentanen Position der Schweißdrahtspitze auf den beiden Werkstücken sowie der Zeit abgetragen ist;
- Fig. 11: ein Verfahrensabschnitt, bei dem sich die Schweißdrahtspitze über dem Unterblech befindet;
- Fig. 12: ein Verfahrensabschnitt, bei dem die zunächst mit dem Unterblech noch in Kontakt befindliche Schweißdrahtspitze wieder in den TCP zurückgeschoben wird;
- Fig. 13: Verfahrwege der Schweißdrahtspitze über die Werkstücke von drei aufeinander folgenden Detektionsverfahrschritten, ausgehend von einem Start bis zu einem Ende der drei Verfahrwege;
- Fig. 14: ein Verfahrensabschnitt eines weiteren erfindungsgemäßen Ausführungsbeispiels, bei welchem das sich über dem Unterblech befindende Schweißdrahtende durch Bewegung des Schweißbrenners um einen Winkel α geneigt wird.
- Fig. 15: ein Verfahrensabschnitt des Verfahrens aus Fig. 14, bei dem der Schweißbrenner auf das Unterblech abgesenkt, die Schweißdrahtspitze mit einer Oberfläche des Unterblechs in Kontakt gebracht und ein Vorschubbewegung des Lichtbogenschweißbrenners in Richtung auf die Fügelinie bei ständigem Kontakt der Schweißdrahtspitze mit der Oberfläche des Unterblechs begonnen wird;
- Fig. 16: ein Verfahrensabschnitt, bei dem die mit der Oberfläche des Unterblechs in ständigem Kontakt befindliche Schweißdrahtspitze eine Stelle der Fügelinie erreicht und hierbei an das Oberblech anstößt;
- Fig. 17: ein Verfahrensabschnitt, bei dem der Lichtbogenschweißbrenner zusammen mit seinem Schweißdraht von der Oberfläche des Unterblechs abgehoben wird;
- Fig. 18: ein Verfahrensabschnitt, bei dem die zunächst mit dem Unterblech noch in Kontakt befindliche Schweißdrahtspitze wieder in den TCP zurückgeschoben wird;
- Fig. 19: Verfahrwege der Schweißdrahtspitze über die Werkstücke von drei aufeinander folgenden Detektionsverfahrschritten, ausgehend von einem Start bis zu einem Ende der drei Verfahrwege.

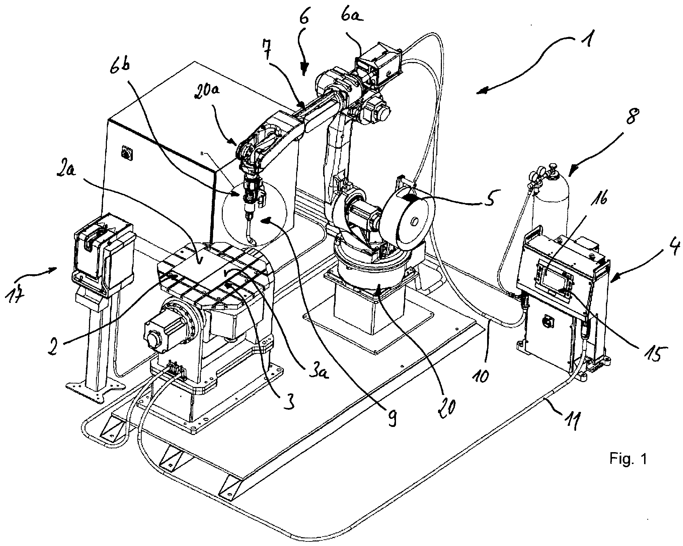

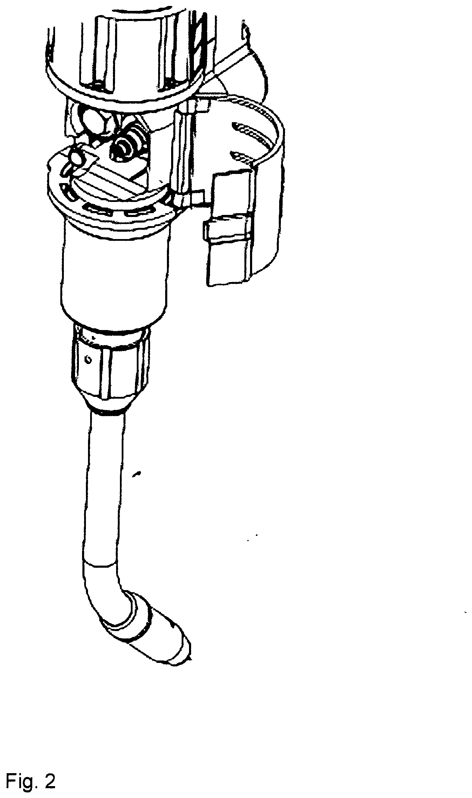

In Fig. 1 ist in stark schematisierter Form eine bevorzugte Ausführungsform einer erfindungsgemäßen automatisierten Lichtbogenschweißanlage 1 zusammen mit miteinander zu verschweißenden Werkstücken 2, 3 dargestellt. Diese weist eine Schweißstromquelle 4, einen Schweißdrahtvorrat 5, eine Drahtvorschubeinrichtung 6, ein Schlauchpaket 7, eine Schutzgasversorgung 8 sowie einen Lichtbogenschweißbrenner 9 auf. Die Schweißstromquelle 4 ist mittels eines ersten Polkabels 10 mit dem Schlauchpaket 7 und mit einem zweiten Polkabel 11 mit dem Werkstück 2 über dessen Spannvorrichtung elektrisch leitend verbunden. Der Lichtbogenschweißbrenner 9 ist am Ende des Schlauchpakets 7 angebracht. Sowohl die Schutzgasversorgung 8 als auch der Schweißdrahtvorrat 5 ist an das Schlauchpaket 7 angeschlossen, wodurch Schutzgas und der Schweißdraht durch das Schlauchpaket und den Lichtbogenschweißbrenner bis zum offenen Ende des Lichtbogenschweißbrenners gelangt und dort aus der Kontaktdüse der Lichtbogenschweißbrenners austritt. Die Drahtvorschubeinrichtung ist im Ausführungsbeispiel zweiteilig aufgebaut, sie weist einen hinteren Drahtvorschub 6a sowie einen vorderen Drahtvorschub 6b auf. Hierbei können an sich bekannte vordere und hintere Drahtvorschübe 6a, 6b vorgesehen sein. Mit dem zwischen dem Schweißdrahtvorrat 5 und dem Schlauchpaket 7 angeordneten hinteren Drahtvorschub 6a wird der Schweißdraht 12 vom Schweißdrahtvorrat 5 abgezogen und in das Schlauchpaket 7 hineingefördert. Mit dem im Bereich des Lichtbogenschweißbrenners 9 angeordneten vorderen Drahtvorschub 6b wird der Schweißdraht aus dem Schlauchpaket herausgezogen und zum offenen Ende des Lichtbogenschweißbrenners gefördert. Wie aus Fig. 2 hervorgeht, weist der vordere Drahtvorschub 6b zwei Rollen 6c, 6d auf. Von diesen kann eine mittels eines in Fig. 2 durch andere Komponenten verdeckten Elektromotors angetrieben sein. Der Schweißdraht ist hierbei zwischen der angetriebenen Rolle 6c und einer passiven Gegenrolle 6d geführt. Die Rotationsbewegung des Elektromotors wird dabei auf die angetriebene Rolle 6c und von dieser als Vorschubbewegung auf den Schweißdraht übertragen. Die Gegenrolle 6d rotiert hierbei passiv mit und dient vor allem zur Führung des Schweißdrahts.

Durch diese an sich bekannte Anordnung lassen in an sich bekannter Weise Lichtbogenschweißungen ausführen, mit denen an Werkstücken Schweißnähte ausgeführt werden können. Die Nahterzeugung basiert hierbei auf einem Abschmelzen des im Schlauchpaket 7 und im Schweißbrenner 9 vorschiebbaren Schweißdrahts 12, wobei hierzu zwischen einer Schweißdrahtspitze und dem jeweiligen Werkstück ein Lichtbogen und gegebenenfalls alternierend hierzu ein Kurzschluß erzeugt wird, wodurch der Schweißdraht und lokal das Werkstück bzw die Werkstücke aufgeschmolzen werden, ineinander fliessen und durch Erstarren miteinander verbunden werden.

Die Schweißstromquelle 4 ist zudem mit einer Schweißstromquellensteuerung 15 und einer Bedieneinrichtung 16 der Steuerung versehen, mit welcher Schweißparameter und Funktionen der Schweißstromquelle 4 und des Schweißprozesses einstellbar sind. Insbesondere sind mittels der Steuerung und deren Bedieneinrichtung auch die Drahtvorschubeinrichtung 6 und deren Elektromotor steuerbar oder regelbar. Es sind hierbei unter anderem Beträge und Richtung der Vorschubgeschwindigkeit und auch der Betrag eines Drehmoments des Antriebsmotors der Drahtvorschubeinrichtung einstellbar.

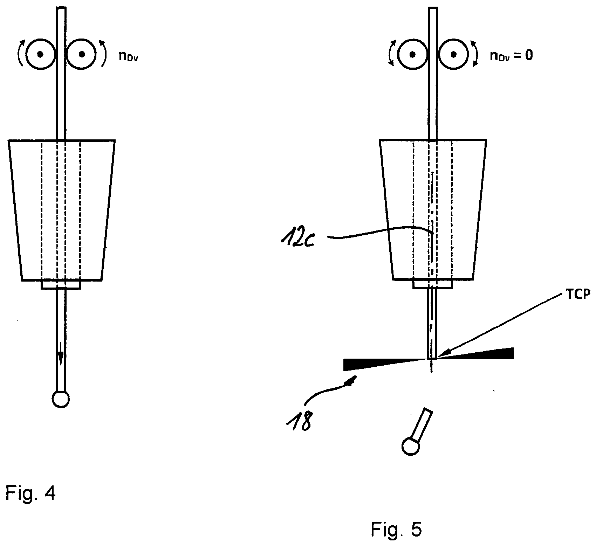

In Fig. 1 ist zudem eine Reinigungsstation 17 dargestellt, die ein nicht im Detail gezeigtes Kürzungswerkzeug beinhaltet. Das in Fig. 4 und 5 schematisch gezeigte Kürzungswerkzeug kann Bestandteil der in Fig. 1 dargestellten Reinigungsstation 17 für das vordere Schweißbrennerende 9a sein. In der Reinigungsstation 17 kann unter anderem das Schweißbrennerende 9a und gegebenenfalls die Schweißdrahtspitze 12a mit dazu geeigneten und an sich vorbekannten Mitteln von Schweißspritzern befreit werden können. Das Kürzungswerkzeug 18 ist mittels der Steuerung ansteuerbar und seine Funktionen auslösbar. Beim Kürzungswerkzeug 18 handelt es sich beispielsweise um einen Drahtabschneider oder Drahtschere, deren Schneiden derart angeordnet sind, daß sie durch Kürzen des Schweißdrahts eine neue Schweißdrahtspitze erzeugen können, die sich im Tool Center Point (TCP) befindet.

Die Lichtbogenschweißbrennereinrichtung 1 ist zur Verwendung in einem Schweißautomaten, wie beispielsweise dem in Fig. 1 dargestellten Schweißroboter 20 vorgesehen. Der Lichtbogenschweißbrenner 9 der Lichtbogenschweißbrennereinrichtung 1 ist hierbei an einem Endmanipulator 20a des Roboters 20 angeordnet, der in verschiedenen Raumrichtungen, vorzugsweise in sämtlichen Raumrichtungen auf beliebigen Vorschubwegen bewegbar ist. Der Endmanipulator 20a kann hierdurch den Lichtbogenschweißbrenner 9 auf seinem Vorschubweg mitführen und der Lichtbogenschweißbrenner 9 hierdurch an Werkstücken Schweißnähte ausführen. Der Lichtbogenschweißbrenner 9 kann hierbei vorzugsweise in prinzipiell gleicher Weise ausgebildet sein, wie der in der WO 2005/049259 A1 offenbarte und beschriebene Lichtbogen-Schweißbrenner, wobei hier Unterschiede hinsichtlich des Endbereichs des Lichtbogenschweißbrenners 9 aus Fig. 1 vorhanden sind, beispielsweise die Integration des vorderen Drahtvorschubs 6b. Prinzipiell kann für diesen Typ an Lichtbogenschweißbrennern 9 jede Art an Hohlwellenrobotern zum Einsatz kommen, ein solcher ist in Fig. 1 in prinzipieller Weise beispielhaft dargestellt. Im Zusammenhang mit der Erfindung können jedoch auch jegliche andere Typen von Lichtbogenschweißbrennern und Robotern zum Einsatz kommen, insbesondere können auch andere Mehrachsenroboter als Hohlwellenroboter und andere Lichtbogenschweißbrenner als solche, wie sie in der WO 2005/049259 A1 beschrieben sind, verwendet werden. So können beispielsweise auch Portalroboter zum Einsatz kommen. Außerdem ist es möglich, daß die erforderlichen Relativbewegungen zwischen den Werkstücken und dem Schweißdraht durch Bewegungen des Werkstücks ausgeführt werden, also insbesondere durch Bewegungen von Werkstückspanneinrichtungen. Ebenso kann eine Aufteilung der erforderlichen Relativbewegungen auf die Werkstücke und die den Schweißdraht, also den Lichtbogenschweißbrenner vorgesehen sein.

Im Zusammenhang mit der Erfindung können insbesondere auch Mehrachsenroboter verwendet werden, die an ihrer letzten Drehachse mit einem Auslegerarm versehen sind, an dessen freien Ende ein Lichtbogenschweißbrenner montiert ist. Eine Rotationsbewegung der letzten Roboterachse führt somit nicht zu einer Rotationsbewegung des Lichtbogenschweißbrenners um seine eigene Längsachse sondern zu einer Schwenkbewegung des gesamten Lichtbogenschweißbrenners um die letzte Roboterachse. Ebenso ist es im Zusammenhang mit jeder Ausführungsform der Erfindung möglich, die zwischen dem Werkstück und dem Schweißbrenner erforderliche Relativbewegung durch das zumindest eine Werkstück auszuführen und den Lichtbogenschweißbrenner ortsfest vorzusehen. Das oder die Werkstücke können somit durch einen Manipulator hierbei bewegt werden. Ebenso ist es möglich die Relativbewegung durch Teilbewegungen des zumindest einen Werkstücks und Teilbewegungen des Lichtbogenschweißbrenners auszuführen.

Durch die nicht zwingend notwendige, jedoch bevorzugte Ausführungsform des Lichtbogenschweißbrenners 9, wonach dieser einen außenliegenden Statorteil und einen innenliegenden Rotorteil aufweist und eine Zuführung und Versorgung der Schweißstelle mit Schweißmedien zumindest im wesentlichen entlang einer und koaxial zu einer Rotationslängsachse der Lichtbogenschweißbrennereinrichtung und des Endmanipulators erfolgt, kann eine Endlosrotationsmöglichkeit des Schweißbrenners 9 erreicht und eine Verdrillung eines Schweißkabels (Schlauchpaket) bei Rotationsbewegungen vermieden werden. Es wird jedoch explizit nochmals darauf hingewiesen, dass der hier gezeigte und erörterte Lichtbogenschweißbrenner 9 lediglich beispielhaft für die Erfindung angeführt ist und die Erfindung grundsätzlich auch im Zusammenhang mit anderen Typen von Lichtbogenschweißbrennern und insbesondere auch mit Lichtbogenschweißbrennereinrichtungen zum Einsatz kommen kann, deren konkreter Aufbau vom Aufbau der nachfolgend erörterten Lichtbogenschweißbrennereinrichtung 1 abweicht.

Bei der lediglich beispielhaft für die Erfindung dargestellten Lichtbogenschweißbrennereinrichtung 1 handelt es sich um einen nach dem Metall-Schutzgas Schweißverfahren arbeitenden Schweißbrenner 9. Bei diesem wird ein beim Schweißprozeß abschmelzender Schweißdraht 12 der vorgesehenen Schweißstelle zu- und aufgrund des Verbrauchs des Schweißdrahts 12 während eines Schweißprozesses kontinuierlich nachgeführt. Der Schweißdraht 12 wird hierbei in der Regel zusammen mit seiner Drahtseele und vorzugsweise einer den Schweißdraht umgebenden Isolierung durch das Innere des Schweißbrenners 9 zugeführt. Zusätzlich wird ein Schutzgas der Schweißstelle zugeführt. Im Ausführungsbeispiel ist das Schutzgas ein Inertgas, in anderen erfindungsgemäßen Ausführungsbeispielen kann als Schutzgas auch ein Aktivgas - oder eine Mischform von beiden - zugeführt werden. Im bevorzugten Ausführungsbeispiel wird zudem im Bereich des hinteren freien Endes der Lichtbogenschweißbrennereinrichtung 1 mit einem der Polkabel 10, 11 Strom in die Lichtbogenschweißbrennereinrichtung 1 eingeleitet und durch die Lichtbogenschweißbrennereinrichtung 1 zur Schweiß- bzw. Prozeßstelle geleitet, der dazu genutzt wird, an der Schweißstelle bzw im Bereich des schweißprozeßseitigen Endes des Lichtbogenschweißbrenners 9, einen Lichtbogen zu zünden und für den Schweißvorgang aufrecht zu erhalten. Die Lichtbogenschweißbrennereinrichtung 1 ist deshalb in ihrem Einsatz mit der Schweißstromquelle 4 und der Drahtvorschubeinrichtung 6 verbunden bzw mit diesen versehen. In bevorzugten Ausführungsbeispielen können sowohl der Schweißdraht 12, als auch das Schutzgas und der Strom über ein an sich bekanntes Schweißkabel, insbesondere ein Koaxialschweißkabel als Schlauchpaket 7, dem Lichtbogenschweißbrenner 9 an seiner Stromanschlußstelle zugeführt werden. An einer Gasanschlußstelle der Lichtbogenschweißbrennereinrichtung 1 wird das Schutzgas in eine Durchleitung des Schweißbrenners 9 in dessen Inneres zur Durchführung des Schutzgases von der Gasanschlußstelle zum freien Ende an die Schweißstelle, eingeleitet. Der Strom wird ebenso vom Schweißkabel 7 durch den Schweißbrenner 9 zur Schweiß- bzw. Prozeßstelle geleitet. Auch der Strom wird im Inneren des Schweißbrenners 9 zur Prozeßstelle geleitet und zwar in einer Weise, in welcher eine Außenseite der Lichtbogenschweißbrennereinrichtung 1 stromfrei ist.

Der Lichtbogeschweißbrenner 9 weist somit einen Brennerhals 9a auf, der über den dazwischengeschalteten vorderen Drahtvorschub 6b der Drahtvorschubeinrichtung 6 mit dem Schlauchpaket verbunden ist. Im bevorzugten Ausführungsbeispiel der Erfindung verläuft das Schlauchpaket in etwa vom hinteren Drahtvorschub 6a zum vorderen Drahtvorschub 6b. In anderen Ausführungsbeispielen kann das vordere Ende des Schlauchpakets auch direkt am Lichtbogenschweißbrenner angeschlossen sein.

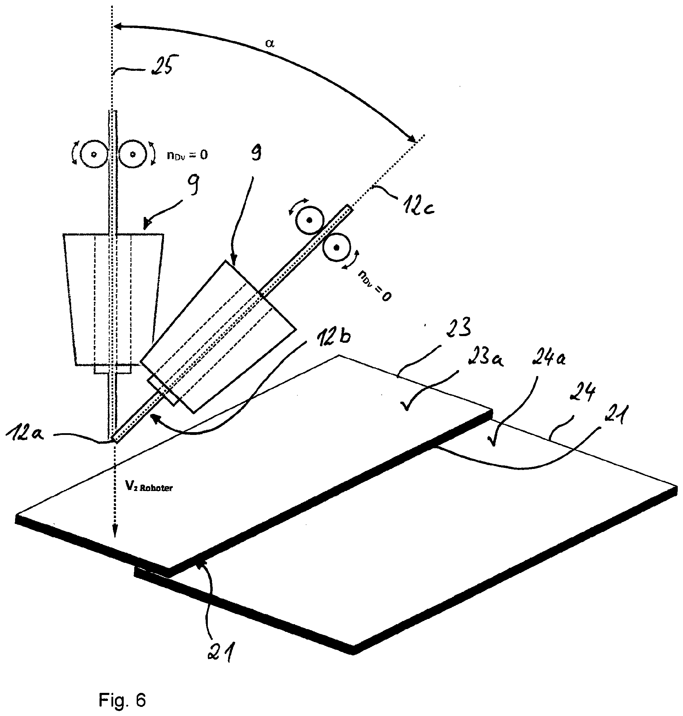

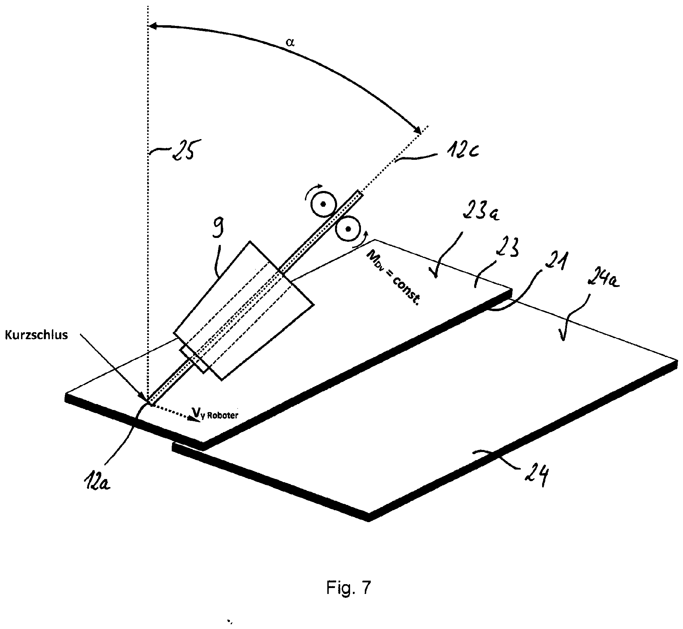

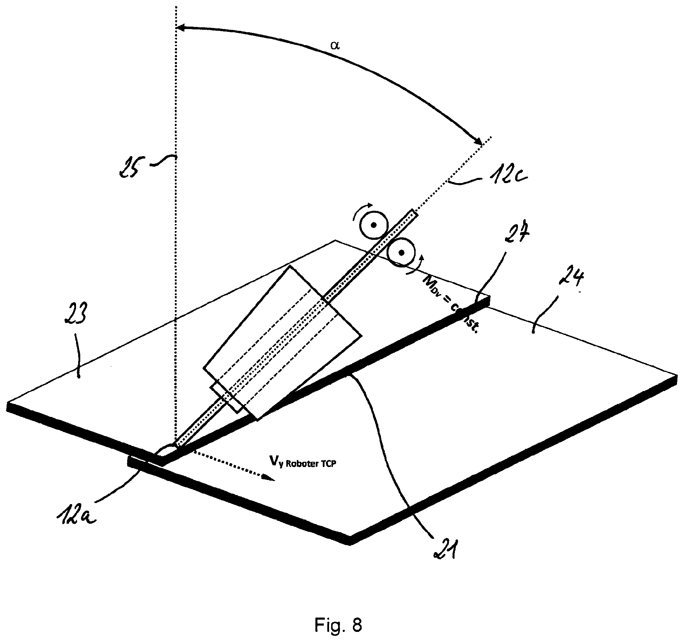

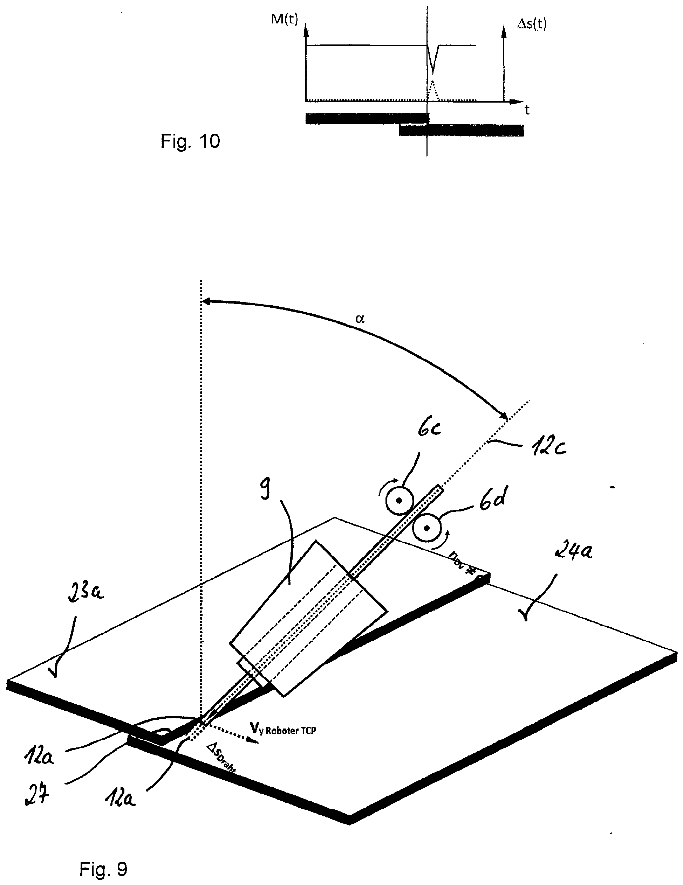

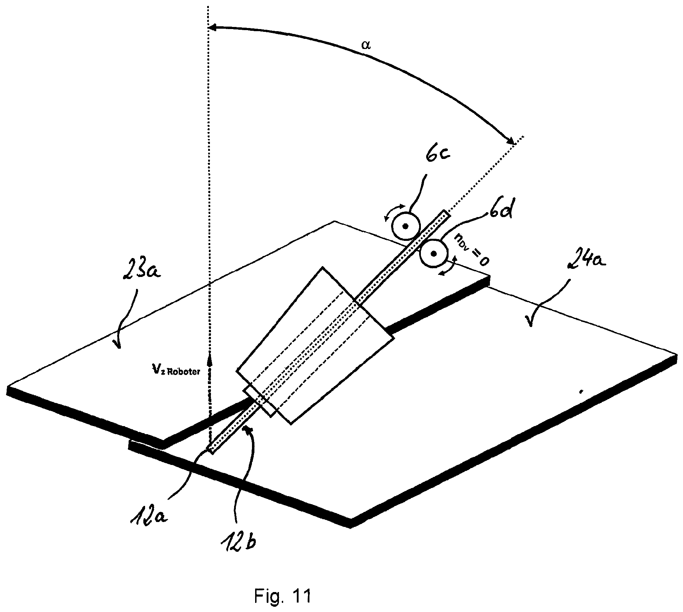

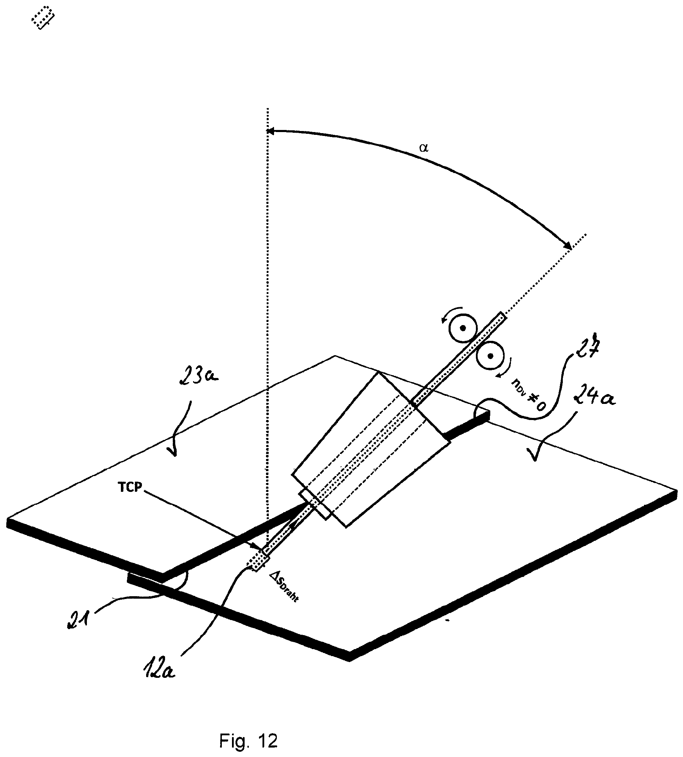

In den Fig. 6 bis 13 ist eine bevorzugte Ausführungsform des erfindungsgemäßen Verfahrens dargestellt. Es handelt sich hierbei um eine Ausführungsform, bei welcher der Lichtbogenschweißbrenner 9 und der Schweißdraht 12 in Bezug auf eine Oberfläche 2a eines der Werkstücke 2, 3 schleppend, was auch als ziehend bezeichnet werden kann, mit seiner Schweißdrahtspitze 12a dabei mit ständigem ununterbrochenen Kontakt mit der Oberfläche über letztere geführt wird.

Zu Beginn kann vorzugsweise der Schweißdraht 12 und sein Lichtbogenschweißbrenner 9 für ein oder mehrere mittels des Schweißroboters 20 ausgeführte Detektionsverfahrwege vorbereitet werden. Hierbei sollen vor allem undefinierte Zustände des Drahtendes für die Ausführung von nachfolgenden Detektionsverfahrschritten beseitigt und solche damit vermieden werden. Durch vordefinierte Zustände des Drahtendes bzw der Schweißdrahtspitze 12a läßt sich die Funktionsgenauigkeit des erfindungsgemäßen Verfahrens vorteilhaft erhöhen. Der Schweißdraht 12 kann im Lichtbogenschweißbrenner 9 mittels der Drahtvorschubeinrichtung 6 nach vorne verfahren werden, so daß auch eventuelle Drahtenddeformationen oder am Drahtende befindlichen Schlacken von vorausgegangenen Schweißprozeßen den TCP (Tool Center Point) überschritten haben und außerhalb des TCP's liegen. Auch eine solche undefinierte Form der Schweißdrahtspitze 12a kann zu Messungenauigkeiten des nachfolgenden zumindest einen Detektionsverfahrschritts führen. Der Schweißbrenner 9 kann zudem mittels des ihn führenden Mehrachsenroboters 20 zuerst in die Reinigungsstation 17 verfahren werden, insbesondere um dort durch einen Schneidvorgang des Schweißdrahts 12 eine neue, sich im TCP befindende, Schweißdrahtspitze 12a zu erzeugen. Beim TCP handelt es sich um einen von der Robotersteuerung angenommenen relativen Nullpunkt des Koordinatensystems, einen Arbeitspunkt, auf den sich sämtliche weitere Koordinaten- und Wegangaben beziehen, und auf dessen Grundlage die Robotersteuerung den Schweißroboter 20 und damit auch den Schweißbrenner 9 bewegt und steuert.

Der Schweißdraht 12 kann für den nachfolgenden Kürzungsvorgang bezüglich einer Ausrichtung der Längsachse des Schweißdraht im Bereich des aus dem Brenner 9 austretenden Schweißdrahtendes 12b senkrecht, d.h. lotrecht, ausgerichtet sein. Danach wird der Motor des vorderen Drahtvorschubs 6b derart bestromt, daß der Draht 12 zwischen der durch den Motor angetriebenen Antriebsrolle 6c und der passiven Gegenrolle 6d geklemmt bzw. blockiert ist. Eine solche Blockierung des Motors und damit Klemmung des Schweißdrahts 12 kann insbesondere durch einen Kurzschluß der Motorwicklungen erreicht werden. Alternativ kann der Motor auch schwach derart bestromt sein, daß sich der Schweißdraht nicht bewegt und durch das geringe Drehmoment des Motors in seiner Position gehalten ist. Mittels einer solchen Klemmung kann verhindert werden, daß sich der Schweißdraht 12 bei einer von außen aufgebrachten Belastung in axialer Richtung bewegt. Es kann außerdem verhindert werden, daß sich der Motor bei einer, insbesondere von außen aufgebrachten, axialen Belastung auf den Schweißdraht 12 und dadurch axialen Bewegung des Schweißdrahts 12, dreht. Nachdem die Drahtvorschubeinrichtung 6 und damit auch der Draht blockiert bzw fixiert ist, kann nun mittels des Kürzungswerkzeugs 18, beispielsweise eine automatisch betätigten Drahtschere, ein über den TCP überstehender Abschnitt des Schweißdrahts 12 abgeschnitten werden. Das hierdurch neu geschaffene Schweißdrahtspitze 12a befindet somit exakt im TCP. Sämtliche weiteren Bewegungen des robotergeführten Lichtbogenschweißbrenners können nun auf den TCP und damit exakt auf diese Schweißdrahtspitze 12a bezogen werden.

In der Robotersteuerung ist ein vom Lichtbogenschweißbrenner 9 unter Anwendung bestimmter Schweißparameter abzufahrender Schweißweg zur Erzeugung einer Schweißnaht eingeteacht und abgespeichert. Zur Ausführung eines ersten Detektionsverfahrwegs verfährt der Schweißroboter 20 den Lichtbogenschweißbrenner 9 in die Nähe der Fügelinie und damit auch in die Nähe des abgespeicherten Soll-Verfahrwegs des Lichtbogenschweißbrenners für die durchzuführende Schweißnahterzeugung. Prinzipiell kann die Fügelinie mit dem Schweißweg zur Erzeugung einer Schweißnaht übereinstimmen. Es ist aber auch möglich, daß aus schweißtechnischen Gründen zwischen der Fügelinie und dem Schweißweg ein Versatz besteht. Im Ausführungsbeispiel ist die Fügestelle ein Überlappstoß, der sich aus zwei übereinander liegenden Blechen als erstes und zweites Werkstück 2, 3 ergibt, die miteinander verschweißt werden sollen. Der Lichtbogenschweißbrenner 9 wird deshalb in eine Position über dem Oberblech 23 der beiden Bleche 23, 24 und mit Abstand zur Fügelinie verfahren. Bis zu diesem Zeitpunkt sollte noch kein Kontakt zwischen dem Schweißdraht 12 und der Oberfläche 23a des Oberblechs 23 stattgefunden haben. Dies kann gegebenenfalls durch eine Kurzschlußerkennung der Schweißstromquelle 4 überwacht werden. Die Koordinaten dieser Position, unmittelbar bevor der Lichtbogenschweißbrenner 9 auf die Oberfläche 23a des oberen Blechs abgesenkt wird, können für nachfolgende Berechnungen in einen Speicher der Steuerung abgelegt werden. Die Koordinaten dieses Punkts können insbesondere auf den TCP bezogen sein.

Bevor der Lichtbogenschweißbrenner 9 auf die Oberfläche 23a abgesenkt wird, wird dieser um einen vorbestimmten Winkel α, bezogen auf eine Senkrechte 25 zur Oberfläche 23a des Oberblechs, zur angenommenen Fügelinie hin geneigt bzw gekippt. Die Kippung erfolgt um den TCP. Günstige Kippwinkel können beispielsweise aus einem Bereich α > 0°bis α = 75°, insbesondere aus einem Bereich von α = 20° bis α = 45° gewählt sein. Die Kippung um den Winkel α erfolgt dabei vorzugsweise in Richtung des nachfolgend vorgesehenen Verfahrwegs, bzw in dessen Bewegungsrichtung, des auszuführenden Detektionverfahrschritts, so daß bei der Bewegung die Schweißdrahtspitze 12a hinterher gezogen wird. Grundsätzlich ist dieses Verfahren aber auch mit nicht gekipptem Schweißdraht, also mit α = 0° denkbar. Durch einen Kippwinkel α aus diesem Winkelbereich kann ein besonders sicherer ständiger Kontakt des Schweißdrahts 12 mit der Oberfläche 23a des jeweiligen Werkstücks bei gleichzeitig möglichst geringer Gefahr eines Umknickens oder einer Verbiegung des Schweißdrahts 12 erreicht werden. Die Größe und Richtung des Kippwinkels α, insbesondere bezogen auf den TCP, können für nachfolgende Berechnungen, beispielsweise der auszuführenden Bewegungen des Schweißbrenners 9 in der Robotersteuerung gespeichert werden. Die Größe bzw der Betrag des Kipp- oder Anstellwinkels α kann zudem in Abhängigkeit der bei einem Schweißprozess vorhandenen bzw vorgesehenen Parameter und Umgebungsbedingungen variieren. Er kann in einer nicht abschließenden Aufzählung beispielsweise von einer Blechdicke des Oberblechs 23, der Spaltsituation zwischen Ober- und Unterblech 23, 24, dem Werkstoff des Schweißdrahts 12 bzw. des Drahtzusatzwerkstoffs, der Oberflächenbeschaffenheit der Bleche 23, 24, sowie der Kontur der Werkstücke abhängig sein bzw variiert werden.

Das Schweißdrahtende 12b kann vorzugsweise auch in einer Richtung quer zur vorgesehenen Bewegungsrichtung des Lichtbogenschweißbrenners, die hin zur Fügelinie 21 verläuft, um einen Winkel β geneigt sein. Auch hier ist der Neigungswinkel β bezogen auf eine Senkrechte, welche die Schweißdrahtlängsachse im Bereich des aus dem Schweißbrenner 9 herausragenden Schweißdrahtendbereichs 12b im TCP schneidet. Das Schweißdrahtende 12c ist somit bei seiner Bewegung über die Oberfläche 23a, 24a eines der Werkstücke vorzugsweise sowohl in oder entgegen der jeweiligen Vorschubrichtung um den Winkel α, als auch quer zur jeweiligen Vorschubrichtung um den Winkel β geneigt. Als Neigungswinkel β kann hierbei ein Winkel β aus einem Bereich 0° ≤ β ≤ 75°, bevorzugt aus einem Bereich 0° ≤ β ≤ 50°, besonders bevorzugt Bereich 0° ≤ β ≤ 30°, vorgesehen sein. Eine solche optionale Ausrichtung des Schweißdrahtendes 12b mit Neigungen um einen Winkel α und/oder einem Winkel β kann bei allen erfindungsgemäßen Ausführungsformen vorteilhafterweise vorgesehen sein. Solche geneigten Ausrichtungen sind jedoch nicht zwingend erforderlich.

Für den nun nachfolgenden Verfahrweg des Detektionsverfahrschritts wird der Rotor des Antriebsmotors des vorderen Drahtvorschubs 6b der Drahtvorschubeinrichtung 6 weiterhin in der zuvor beschriebenen Weise blockiert, so daß weiterhin der Antriebsmotor gegen ein Verdrehen seiner Antriebswelle, aufgrund eines über den Schweißdraht 12 von außen aufgebrachtes, mögliches Drehmoment blockiert und der Schweißdraht geklemmt ist. Da der Schweißdraht 12 in dieser Situation weitestgehend rutsch- und schlupfest zwischen Rollen 6c, 6d der Drahtvorschubeinrichtung 6b gehalten ist, kann auch keine Verschiebung des Schweißdrahts 12 in dessen axialer Richtung stattfinden. Die Schweißdrahtspitze 12a verbleibt somit im TCP und wird somit weder durch den Antriebsmotor noch durch eine von außen aufgebrachte axiale Kraft verschoben. Er wird in seiner relativen Position zum Schweißbrenner 9 und damit auch die Schweißdrahtspitze 12a im TCP gehalten. Der Roboter 20 verfährt nun mit dem eingespannten Lichtbogenschweißbrenner 9 auf die Oberfläche 23a des Oberblechs 23 zu, also mit einer Bewegungskomponente in etwa senkrecht zur Oberfläche 23a des Oberblechs 23. Vorzugsweise ist hierbei die Kurzschlusserkennung eingeschaltet, so daß ein Kontakt der Schweißdrahtspitze 12a mit der Oberfläche 23a des metallischen Oberblechs 23 detektiert wird. Für die Kurzschlußerkennung kann eine geringe Hilfs- oder Leerlaufspannung am Schweißdraht 12 anliegen und das Werkstück im Stromkreis des Schweißdrahts 12 integriert sein. Sobald die Drahtspitze 12a die Oberfläche 23a berührt, wird dies durch die Kurzschlußerkennung festgestellt und der Roboter 20 in seiner Verfahrbewegung auf das Oberblech 23 zu, durch die Steuerung sofort gestoppt. Die Koordinaten dieser ersten Kontaktstelle des Schweißdrahts 12 können in der Steuerung für spätere Berechnungen der Koordinaten der IST-Fügestelle im Speicher abgelegt werden.

Nun wird der Schweißdraht 12 mittels des Motors der Drahtvorschubeinrichtung 6b mit einem konstanten Drehmoment beaufschlagt. Dies hat zur Folge, daß der Schweißdraht 12 die Tendenz hat, im Schweißbrenner 9 in Richtung zur am vorderen Ende des Schweißbrenners 9 angeordneten Kontaktdüse vorgeschoben zu werden, dies jedoch aufgrund des Kontakts der Schweißdrahtspitze 12a mit dem Oberblech 23 verhindert bzw blockiert wird. Die Steuerung der Schweißstromquelle 4 bzw der Drahtvorschubeinrichtung 6 versucht dieses konstant große Drehmoment während des gesamten nachfolgenden Verfahrwegs auf dem Oberblech 23 beizubehalten. Der Mehrachsroboter 20 beginnt nun den Lichtbogenschweißbrenner 9 mit der dabei ununterbrochen mit der Oberfläche 23a des Oberblechs 23 in Kontakt befindlichen Schweißdrahtspitze 12a in Richtung auf die von der Steuerung angenommene Fügelinie des Oberblechs 23 mit dem Unterblech 24 zuzubewegen. Die vom Roboter 20 verwendete Bewegungsrichtung kann hierbei vorzugsweise senkrecht zum angenommenen und in der Steuerung abgelegten Verlauf der Fügelinie ausgerichtet und vorgenommen sein. Falls die Oberfläche 23a des Oberblechs 23 einen dreidimensionalen Verlauf hat, so kann die senkrechte Ausrichtung in Bezug auf eine Projektion der Oberfläche 23 und der angenommenen Fügekante jeweils in die X-Y Ebene vorgesehen sein, wobei der tatsächliche Verfahrweg des Roboters 20 noch durch die Z-Koordinate des Oberflächenverlaufs ergänzt ist.

Trifft die Schweißdrahtspitze 12a dann auf die IST-Fügekante 21, wird die Spitze 12a über die Begrenzungskante 27 des Oberblechs 23 dessen Oberfläche 23a verlassen. Aufgrund des Absatzes zum Unterblech 24 verliert die Schweißdrahtspitze 12a beim Überfahren der Begrenzungskante 27 des Oberblechs zumindest kurzfristig den Kontakt mit dem Oberblech 23, bis es dann wieder Kontakt mit dem Unterblech 24 hat. Aufgrund des Kontaktverlusts und aufgrund des Verlassens des Oberblechs 23 führt dies einerseits dazu, daß der Kurzschluß mit dem Oberblech 23 aufgehoben ist und die Kurzschlußerkennung dies detektiert und feststellt. Andererseits führt dies auch dazu, daß der Schweißdraht 12 in Bezug auf eine Förderbewegung durch den Antriebsmotor nicht mehr blockiert ist. Das auf den Schweißdraht 12 wirkende Drehmoment des Antriebsmotors bewirkt deshalb eine Förderbewegung des Schweißdrahts in Richtung dessen Längsachse um einen Betrag Δs, um damit die Höhendifferenz zwischen den Oberflächen 23a, 24a des Ober- und Unterblechs 23, 24 auszugleichen. Hierdurch kommt die Schweißdrahtspitze 12a wieder sofort mit der Oberfläche 24a des Unterblechs 24 in Kontakt. Die Förderbewegung ist dadurch wieder blockiert und der Kurzschluß wieder hergestellt. Das ursprünglich anliegende Drehmoment liegt nun ebenfalls wieder an der Antriebsrolle 6c des vorderen Drahtvorschubs 6b an und die Schweißdrahtspitze 12a wird hierdurch gegen die Oberfläche 24a des Unterblechs 24 angedrückt. Anstelle des Drehmoments kann als Detektionsgröße auch beispielsweise eine aufgrund der Drahtvorschubeinrichtung 6 auf den Schweißdraht wirkende axiale Kraft, ein Motorstrom des Antriebsmotors oder auch eine Leistungsaufnahme des Motors sowie davon jeweils abhängige weitere physikalische Größem dienen.

Um mit dieser Vorgehensweise Informationen zum IST-Verlauf der Fügelinie 21 zu ermitteln, kann in der hier beschriebenen bevorzugten Ausführungsform der Erfindung die Motordrehmomentänderung bei Überfahren der Fügelinie als ein erstes Detektionssignal verwendet werden. Über die seit dem Start dieses Detektionsverfahrwegs bis zur Änderung, hier Einbruchs, des Motordrehmoments verstrichene Zeit, sowie mittels der dabei verwendeten konstanten IST-Geschwindigkeit der Verfahrbewegung und der Verfahrrichtung des Schweißbrenners 9 können die Koordinaten der Stelle bestimmt werden, an der sich die Schweißdrahtspitze 12a beim Eintritt der Drehmomentreduzierung befindet. Diese Koordinaten werden in der Steuerung abgelegt und stellen einen Punkt des tatsächlichen Verlaufs der Fügelinie 21 dar. Alternativ und bevorzugt hierzu können von der Robotersteuerung die Koordinaten festgestellt und abgespeichert werden, die die Schweißdrahtspitze zum Zeitpunkt eingenommen hat, als das Motordrehmoment zu sinken begann oder einen bestimmten vorbestimmten Schwellwert unterschreitet. Die Robotersteuerung kann bei allen von ihr festzustellenden und zu speichernden Koordinaten auf die X-Y-Z Achsen des Roboters selbst zurückgreifen bzw die Werte von diesen abgreifen und gegebenenfalls speichern.

Vorzugsweise wird alternativ oder zusätzlich auch die Bewegung des Schweißdrahts12, bei der sich dieser um den Betrag Δs bewegt, entweder direkt oder indirekt detektiert. Diese Bewegung bzw. Wegstrecke wird als vorzugsweise zweites Signal neben dem Moment des Drahtvorschubmotors bereitgestellt. Die Wegstrecke Δs kann beispielsweise direkt oder indirekt aus dem Drehwinkel bestimmt werden, um den sich der Drahtvorschubmotor sich dreht, damit eine Förderbewegung des Schweißdrahts um die Wegstrecke Δs erreicht wird. Auch eine solche Detektion kann als Detektionsergebnis für ein Auffinden einer Stelle der Fügelinie 21 gewertet werden. Die Steuerung der Lichtbogenschweißeinrichtung 1 kann dann in prinzipiell gleicher Weise wie beim zuvor beschriebenen ersten Detektionssignal die Koordinaten der Stelle der Fügelinie 21 bestimmen, an der sich die Schweißdrahtspitze 12a beim Eintritt der Drehmomentreduzierung befindet. Auch diese Koordinaten, die mit den Koordinaten übereinstimmen sollten, die mit dem ersten Detektionssignal ermittelt werden können, werden im Speicher als eine Stelle des IST-Verlaufs der Fügelinie 21 abgelegt. In unterschiedlichen bevorzugten Ausführungsformen der Erfindung können beide der zuvor beschriebenen Detektionsmethoden oder jeweils nur eine der beiden verwendet werden, um damit in der beschriebenen Weise die Koordinaten einer Stelle der Fügelinie 21 zu bestimmen.

Nachfolgend wird das vom Antriebsmotor der Drahtvorschubeinrichtung 6 erzeugte Drehmoment wieder auf einen Betrag reduziert, durch welchen der Schweißdraht 12 nicht gefördert, aber zwischen den Rollen 6a, 6b der Drahtvorschubeinrichtung geklemmt ist. Dies kann beispielsweise über einen Kurzschluß der Windungen des Motors oder aktiv über ein alternierendes Vor- und Zurückbewegen des Schweißdrahts 12 um beispielsweise +/- 1 Inkrement des Motors erfolgen. Der Roboter 20 fährt anschließend den Schweißbrenner 9 in Z-Richtung, bzw senkrecht zur Fläche in der sich die Fügekante befindet, vom Unterblech 24 weg.

Zusätzlich wird auch der Schweißdraht 12 wieder um den zuvor ausgeführten Vorschubweg Δs um die gleiche Weglänge zurückgezogen. Dies kann beispielsweise dadurch geschehen, dass der Motor der des vorderen Drahtvorschubs 6b in nun umgekehrter Drehrichtung um die gleiche Anzahl an Inkrementen zurückgedreht wird, mit welcher er zuvor in die andere Rotationsrichtung in Vorwärtsvorschubrichtung gedreht wurde, um den Vorschub mit dem Betrag Δs auszuführen. Hierdurch gelangt die Schweißdrahtspitze 12a wieder in den TCP.

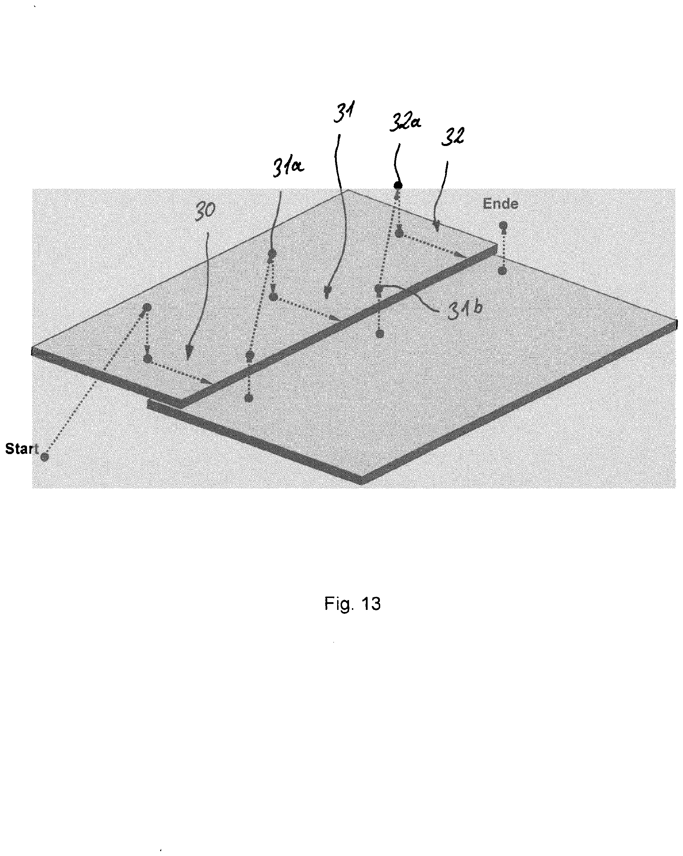

Nachfolgend wird der zuvor ausgeführte erste Detektionsverfahrschritt an zumindest einer anderen Stelle der Oberfläche 23a in prinzipiell gleicher Weise wiederholt, um zumindest eine zweite Stelle des IST-Verlaufs der Fügelinie 21 zwischen dem Oberblech 23 und dem Unterblech 24 zu detektieren. Bei geradlinig verlaufenden Fügelinien 21 werden in der beschriebenen Weise vorzugsweise zumindest drei zueinander beabstandete Stellen des IST-Verlaufs ermittelt und hierzu zumindest drei Detektionsverfahrschritte ausgeführt. Die Bewegungsbahnen bzw Verfahrwege dieser in prinzipiell gleicher Weise ausgeführten Detektionsverfahrschritte sollten möglichst gleichmäßig über die Länge des elektronisch erfaßten SOLL-Verlaufs der Fügelinie 21 verteilt sein. In Fig. 13 sind diese bevorzugten zumindest drei Detektionsverfahrschritte 30, 31, 33 schematisch dargestellt. Wie daraus hervorgeht, verfährt der Roboter den Lichtbogenschweißbrenner, ausgehend vom ersten Detektionsverfahrschritt 30 unmittelbar zur Startstelle 31a des zweiten Detektionsverfahrschritts 31. Diese Startstelle 31a befindet sich wieder über dem Oberblech 23. Sobald der Lichtbogenschweißbrenner 9 sich an dieser Startstelle 31a befindet werden sämtliche Verfahrensschritte aus dem ersten Detektionsverfahrschritts in identischer Weise für den zweiten Detektionsverfahrschritt ausgeführt. Dies bedeutet, die Koorodinaten der Startstelle 31a können vorzugsweise abgespeichert werden. Der Lichtbogenschweißbrenner 9 wird um die Winkel α und β in Bezug auf eine Senkrechte zur Oberfläche 23a, welche durch die Schweißdrahtspitze 12a verläuft, gekippt sofern er nicht bereits um diese Winkel α und β gekippt ist, der Schweißdraht 12 durch Bestromen des Motors des vorderen Drahtvorschubs 6b zwischen deren Rollen 6c, 6d geklemmt, der Lichtbogenschweißbrenner 9 mittels des Roboters 20 langsam auf die Oberfläche 23a des Oberblechs 23 abgesenkt und die Kurzschlußerkennung aktiviert. Sobald die Schweißdrahtspitze 12a die Oberfläche 23a berührt, wird die Bewegung des Roboters 20 aufgrund des erkannten Kurzschlußes und eines entsprechenden Detektionssignals gestoppt und die Koordinaten der Kontaktstelle gegebenenfalls im Speicher abgespeichert. Nun wird wiederum der Schweißdraht 12 mittels des Motors des vorderen Drahtvorschubs 6b mit einem konstanten Drehmoment in Vorschubrichtung beaufschlagt, wobei durch eine entsprechende Regelung versucht wird, das Drehmoment möglichst während des gesamten Detektionsverfahrschritts 31 aufrecht zu erhalten und bei einem Abfall wieder auf den ursprünglichen Wert zu erhöhen. Die Schweißdrahtspitze 12a wird nun gekippt und schleppend und mit konstant vorhandenem Kontakt mit der Oberfläche 23a über letztere gezogen. Bei Überfahren der Begrenzungskante 27 des Oberblechs 23 und einer dadurch bedingten Förderbewegung des Schweißdrahts 12 durch den Motor und/oder durch Erkennen eines Unterbruchs des Kurzschlußes, wird die Fügelinie 21 detektiert und die Koordinaten dieser zweiten detektierten Stelle der Fügelinie 21 im Speicher abgespeichert. Abschließend wird das eine Förderung des Schweißdrahts 12 ermöglichende Drehmoment wieder zurückgenommen, der Schweißdraht 12 zwischen den Rollen 6a, 6b lediglich geklemmt und der das Unterblech 24 berührende Schweißdraht von letzterem abgehoben.

Wiederum von diesem Endpunkt 31b des unmittelbar vorausgegangen Detektionsverfahrschritts 31, hier des zweiten Detektionsverfahrschritts 31, wird der Schweißbrenner 9 zum Startpunkt 32a des nächsten Detektionsverfahrschritts 32 verfahren, hier des dritten und letzten Detektionsverfahrschritts 32. Der Verfahrweg des dritten Detektionsverfahrschritts 32 ist zum zweiten und mit noch größerem Abstand zum ersten Detektionsverfahrschritts 30 beabstandet. Der dritte Detektionsverfahrschritt 32 wird in gleicher Weise wie der erste und der zweite Detektionsverfahrschritts 30, 31 ausgeführt, auf welche hiermit für den dritten Detektionsverfahrschritt 32 Bezug genommen und deren Inhalte hiermit aufgenommen werden. Hierbei ist insbesondere darauf hinzuweisen, daß auch hier zunächst ein elektrisch leitender Kontakt der Schweißdrahtspitze 12a mit dem Werkstück festgestellt, der Schweißdraht 12 um einen Kippwinkel α zur Oberfläche sowie in Verfahrrichtung gekippt sowie um den Winkel β quer zur Verfahrrichtung gekippt und mit ununterbrochen vorhandenem Kontakt mit der Oberfäche 23a über diese geführt wird, um bei eintretendem Verlust des Kontakts die Koordinaten der zu diesem Zeitpunkt von der Schweißdrahtspitze 12a eingenommenen Position im Speicher der Robotersteuerung abzulegen. Vorzugsweise wird, wie zuvor bei den vorausgegangenen Detektionsverfahrschritten 30, 31, der Robotersteuerung durch die Schweißmaschinensteuerung mittels eines Signals mitgeteilt, daß die bei Empfang des Signals eingenommene Position der Schweißdrahtspitze 12a in Form der entsprechenden X-Y-Z Koordinaten abgespeichert werden sollen.

Aus den Koordinaten der drei detektierten Stellen der Fügekante wird nun von der Steuerung durch Interpolation ein dreidimensionaler IST-Verlauf der Fügekante und damit ein IST-Verlauf des nachträglich abzufahrenden Schweißwegs des vom Roboter geführten Lichtbogenschweißbrenners berechnet. Da der Steuerung bekannt ist, daß die Fügelinie einen geradlinigen Verlauf haben muß, kann vorgesehen sein, daß die Steuerung aus den drei Punkten eine Gerade berechnet, die derart verläuft, daß sie allen drei Punkten möglichst nahe kommt. Alternativ kann auch vorgesehen sein, daß als Fügelinie eine Punkt zu Punkt Verbindung berechnet wird und somit der errechnete Verlauf der Fügelinie 21 vom ersten zum zweiten Punkt und vom zweiten zum dritten Punkt jeweils geradlinig verläuft, die gesamte Fügelinie 21 somit aber einen insgesamt nicht geradlinig verlaufenden Polygonzug darstellt. Falls bei einer geradlinig verlaufenden SOLL-Fügelinie lediglich nur zwei Punkte bestimmt werden, kann die von der Steuerung bestimmte IST-Fügelinie eine durch die beiden Punkte verlaufende Gerade sein. Die Berechnung des IST-Verlaufs des Schweißwegs aufgrund des Verlaufs der IST-Fügelinie 21 kann hierbei auf den TCP des Lichtbogenschweißbrenners 9, also auf die Schweißdrahtspitze 12a, bezogen sein. Der IST-Verlauf des Schweißwegs muß nicht zwingend identisch mit dem Verlauf der IST-Fügelinie 21 sein. Je nach Schweißaufgabe kann der errechnete IST-Verlauf des Schweißwegs beispielsweise einen Versatz zur IST-Fügelinie 21 aufweisen und damit vom IST-Verlauf der Fügelinie 21 abweichen.

Schließlich ist noch anzumerken, daß in anderen Ausführungsformen der Erfindung auch eine andere Anzahl an Detektionsverfahrschritten 30, 31, 32 vorgesehen sein kann, also nur zwei oder mehr als drei Detektionsverfahrschritte 30, 31, 32. Eine deutlich größere Anzahl an Detektionsverfahrschritten kann insbesondere bei einem nicht geradlinigen Verlauf der Fügelinie 21 vorgesehen sein. Zudem können sich in anderen Ausführungsformen der Erfindung die für eine Detektion von mehreren Stellen einer Fügelinie 21 vorgesehenen Detektionsverfahrschritte sich hinsichtlich ihrer Verfahrensabschnitte auch voneinander unterscheiden. Ebenso können für eine Bestimmung eines Verlaufs einer Fügekante auch zueinander nicht parallel verlaufende Verfahrwege von Detektionsverfahrschritten 30, 31, 32 vorgesehen sein.

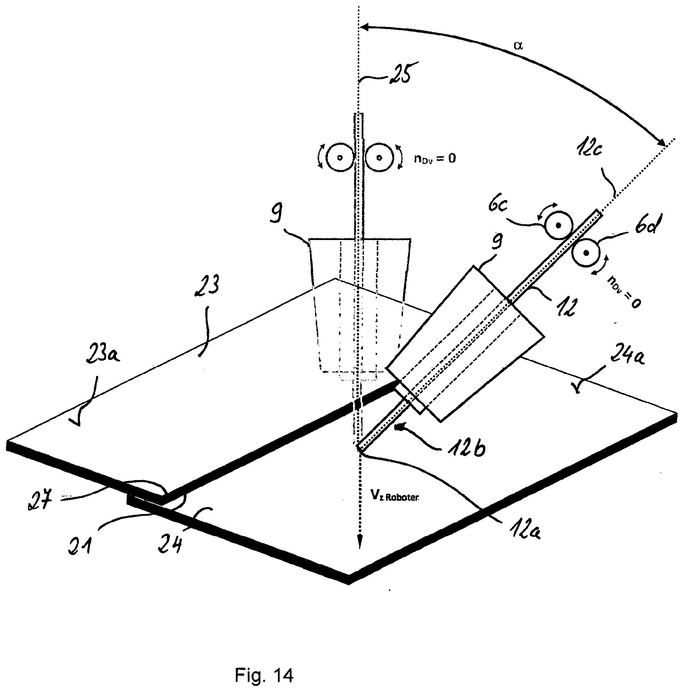

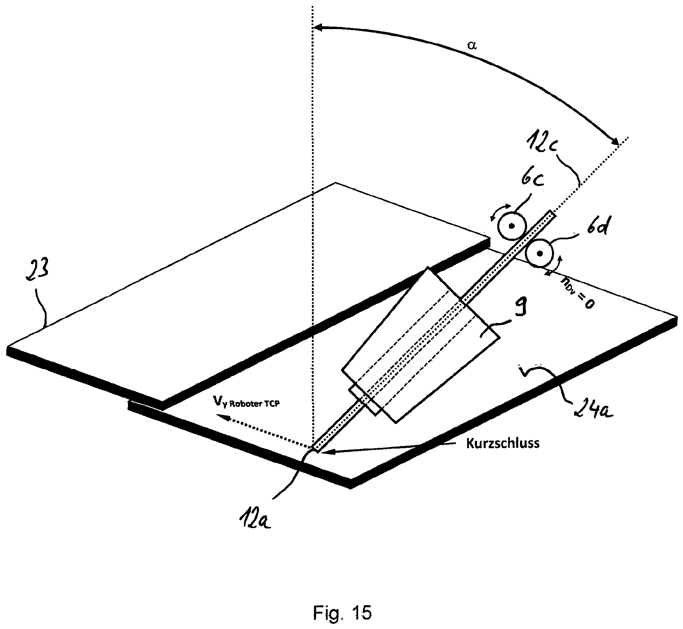

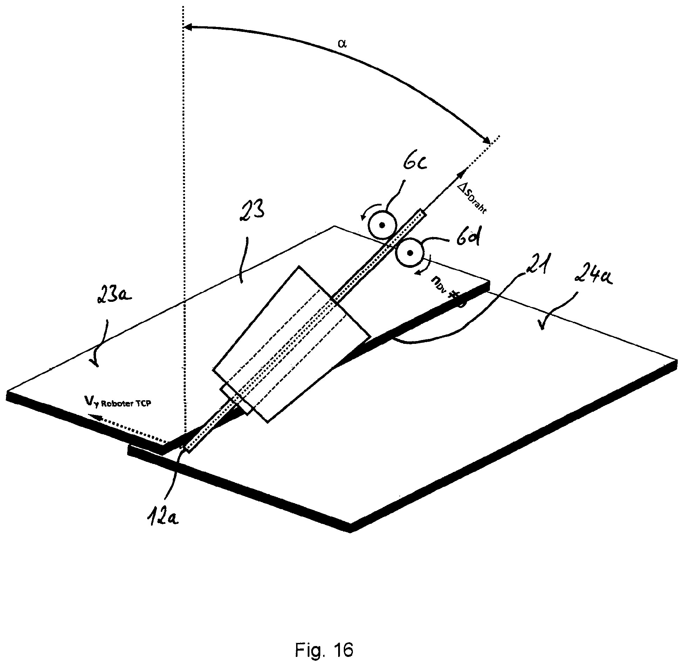

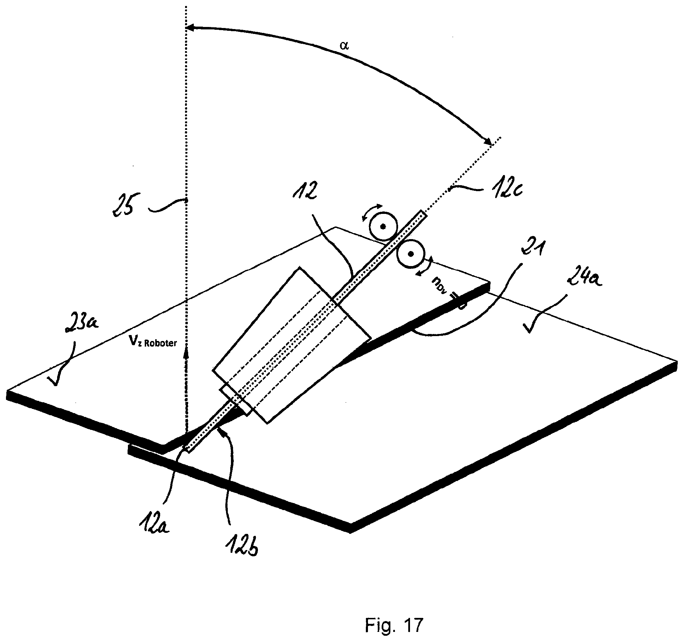

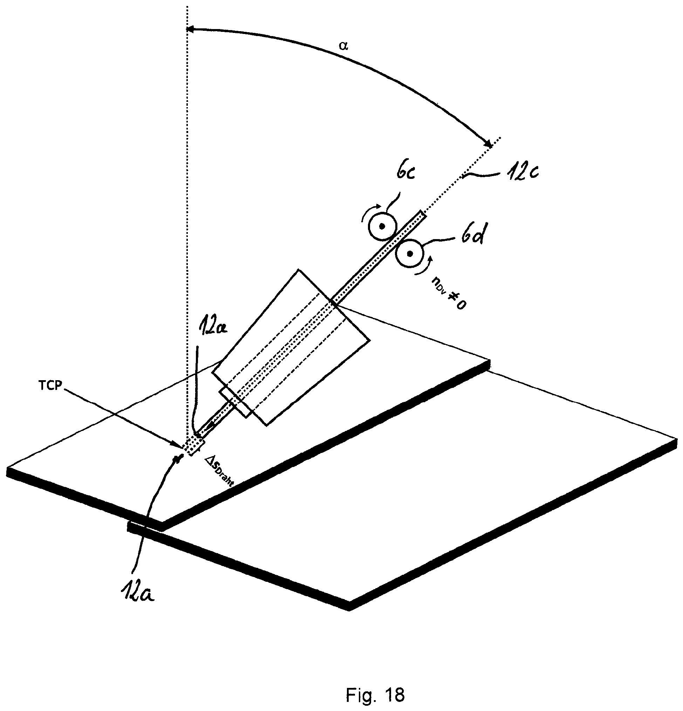

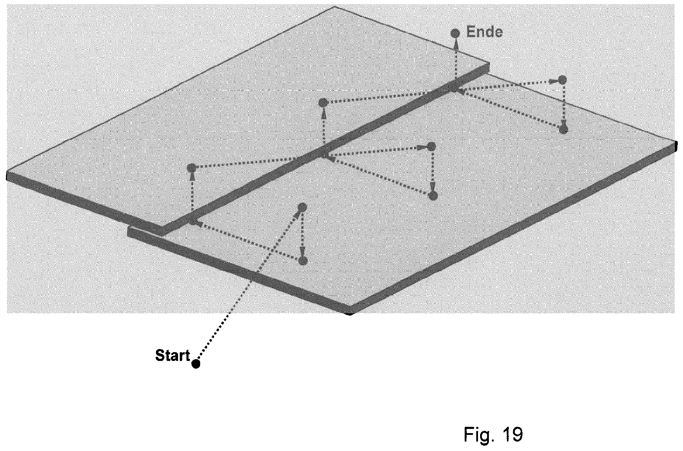

Nachfolgend wird in den Fig. 14 - 19 eine weitere bevorzugte Ausführungsform der Erfindung erläutert. Bei dieser kann die Schweißdrahtspitze entweder mit ständigem Kontakt mit der Oberfläche 23 von einem der Werkstücke 2, 3 oder mit ständigem Nicht-Kontakt geführt sein, um eine Änderung dieses Kontakts bzw Nicht-Kontakts als Detektionsereignis für eine Stelle der Fügelinie vorzusehen. Im Unterschied zum ersten Ausführungsbeispiel wird hier jedoch die Schweißdrahtspitze nicht schleppend sondern stechend über die Oberfläche 23 geführt, was auch als drückend bezeichnet werden kann. Auch diese bevorzugte erfindungsgemäße Ausführungsform kann insbesondere, aber nicht nur, zur Detektion einer Fügekante zwischen einem Oberblech 23 und einem Unterblech 24 dienen, wie es auch mit dem in den Fig. 6 -13 gezeigten Ausführungsbeispiel der Erfindung möglich ist. Ebenso wie beim ersten bevorzugten erfindungsgemäßen Ausführungsbeispiel kann eine Kalibrierung bzw. Referenzierung der Schweißdrahtspitze 12a alternativ auch durch Anfahren einer Referenzposition und Kontaktieren dieser auf einem Referenzblech vorgenommen werden. Sobald sich der Lichtbogenschweißbrenner in dieser Referenzposition befindet, kann auch bei diesem Ausführungsbeispiel der Schweißdraht 12 durch den vorderen Drahtvorschub 6b geklemmt werden, beispielsweise durch Kurzschluß der Motorwindungen, so daß sich die Schweißdrahtspitze 12a auch bei axialer Belastung nicht bewegen kann. Eine Kürzung des Schweißdrahtendes 12b findet vorzugsweise statt, nachdem der Draht 12 zwischen den Rollen 6c, 6d der Drahtvorschubeinrichtung geklemmt bzw. blockiert ist. Für die nachfolgende stechende Bewegung über die Überfläche er Schweißdraht, sollte die Klemmung des Drahts für diese Bewegung vorzugsweise zumindest zunächst beibehalten werden.

Nachdem sich nun die Drahtspitze 12a im TCP befindet, fährt der Roboter 20 den Schweißbrenner 9 in die Nähe der Fügelinie 21 zwischen den beiden Werkstücken. Die Drahtspitze 12a ist hierbei über dem ersten Blech 23 bzw ersten Fügepartner und mit Abstand zu diesem angeordnet, ohne dieses Blech 23 zu berühren, angeordnet. Die Kurzschlußerkennung ist aktiv und kann sicherstellen, daß momentan noch kein Kontakt mit dem Unterblech 24 vorhanden ist. Die Koordinaten dieses Punkts bezogen auf den TCP werden vorzugsweise für nachfolgende Berechnungen im Speicher der Robotersteuerung abgelegt.

Der Lichtbogenschweißbrenner 9 und das Schweißdrahtende 12b werden auch bei diesem bevorzugten erfindungsgemäßen Ausführungsbeispiel um einen Winkel α geneigt, bezogen auf eine Senkrechte 25 zur Oberfläche 24a des Unterblechs 24, welche die Drahtspitze 12a in dieser Position und damit auch den TCP schneidet. Vorzugsweise kann der Winkel aus einem Bereich von größer 0° bis 75° gewählt sein.

Besonders bevorzugt ist hierbei ein Winkel α von 20° bis 50°, mit welchem ein sogenannter "Stick-Slip" Effekt bei der drückenden Bewegung der Schweißdrahtspitze 12a besonders effektiv vermieden werden kann. Da vorzugsweise erfindungsgemäß möglichst ein ständiger Kontakt zwischen der Schweißdrahtspitze 12a und der Oberfläche 23a des jeweiligen Werkstücks bestehen sollte und dieser nur dann aufgehoben sein sollte, wenn die Schweißdrahtspitze 12a auf die Fügelinie 21 trifft, unterstützt die Einhaltung dieses Winkelbereichs, um eine möglichst hohe Funktionssicherheit zu erreichen und andere Maßnahmen dafür vermeiden zu können. Der Anstellwinkel α kann beispielsweise in Abhängigkeit der Blechdicke des oberen Werstücks/Fügebauteils (beispielsweise bei einem Überlappstoß), der geometrischen Spaltsituation zwischen dem oberen und unteren Fügebauteil, dem Werkstoff des Schweißdrahts 12, dem Durchmesser des Schweißdrahts 12 und der Oberflächenbeschaffenheit der Werkstücke/Fügebauteile gewählt werden. Der Lichtbogenschweißbrenner 9 und das Schweißdrahtende 12b werden auch hier zusätzlich um den Winkel β quer zur Verfahrrichtung geneigt. Mögliche Winkelbereich für den Winkel β können wie beim zuvor beschriebenen Ausführungsbeispiel der Erfindung gewählt sein.

Um mit dem Dektektionsverfahrschritt nun eine IST-Stelle der Fügelinie 21 zu ermitteln, wird der Schweißbrenner zunächst auf die Oberfläche 24a des Unterblechs 24 abgesenkt und dann entlang der Oberfläche 24a zur Fügelinie 21 verfahren. In einer bevorzugten Variante des erfindungsgemäßen Verfahrens kann hierbei der Schweißdraht beim Absenken geklemmt bleiben, bis die Schweißdrahtspitze die Oberfläche 24a berührt. Danach kann die Klemmung des Schweißdrahts zwischen den Rollen 6c, 6b aufgehoben und der Schweißdraht 12 entweder im wesentlichen lose oder mit geringem Drehmoment in Position gehalten werden. Hierdurch wird der Schweißdraht zwar nicht in Vorschubrichtung gefördert, kann aber durch eine äußere Belastung in axialer Richtung verschoben werden. Die zuvor vorgesehene Klemmung des Schweißdrahts kann vorzugsweise im vorderen Drahtvorschub 6c mittels des Antriebsmotors und der von ihr angetriebenen Vorschubrolle 6c erfolgen. Hierzu kann der Antriebsmotor derart bestromt sein, daß die Motorwelle und die angetriebene Rolle 6c weder von selbst aktiv noch durch eine auf den Draht wirkende äußere Kraft passiv drehbar ist. Ausserdem kann die Kurzschlußerkennung eingeschaltet werden, mit welcher ein Kurzschluß zwischen dem Schweißdraht 12, an dem eine Spannung anliegt, und dem Werkstück detektiert werden kann. Die Schweißdrahtspitze 12a befindet sich hierdurch sicher im TCP. Mit diesem in Position gehaltenen Schweißdraht 12 verfährt der Roboter 20 den Lichtbogenschweißbrenner 9 in Richtung auf eine Stelle der Oberfläche 24a des Unterblechs 24 zu, an welcher der Schweißdraht 12 die Oberfläche 24a erstmals berühren soll. Dabei kann eine geringe Bewegungsgeschwindigkeit gewählt werden, damit die Zustellbewegung sofort bei Kontakt des Schweißdrahts 12 mit dem Unterblech 24 gestoppt werden kann.

Unmittelbar bei Erkennung des Kurzschlusses aufgrund eines Kontakts der Drahtspitze 12a mit der Oberfläche 24a des Werkstücks wird dann auch die Zustellbewegung des Roboters 20 durch die Steuerung gestoppt. Die Koordinaten, bezogen auf den TCP, dieser Kontaktstelle können bei Bedarf im Speicher der Robotersteuerung abgelegt und gespeichert. Sie können gegebenenfalls in die nachfolgende Berechnung des IST-Verlaufs der Fügelinie 21 einfliessen.

Nun wird in einer ersten Variante dieses Ausführungsbeispiels der Schweißdraht 12 um wenige Inkremente des Elektromotors in Rückzugsrichtung des Schweißdrahts 12 gedreht, so daß die Schweißdrahtspitze 12a keinen Kontakt mit dem unteren Fügebauteil, hier dem Unterblech 24, mehr hat. Hierdurch ist der Kurzschluß aufgehoben. Alternativ hierzu kann auch der Lichtbogenschweißbrenner 9 durch den Mehrachsenroboter 20 angehoben werden. Der Schweißdraht kann nun nicht mehr durch die Drahtvorschubeinrichtung geklemmt sondern in der bereits zuvor beschriebenen losen bzw passiv verschiebbaren Weise im Schweißbrenner 9 angeordnet sein. Der Lichtbogenschweißbrenner 9 wird nun mit der geringfügig vom Unterblech 24 abgehobenen Drahtspitze 12a in Richtung der angenommenen Fügekante 21 bewegt. Die Drahtspitze 12a bewegt sich dabei voraus, also in einer "stechenden" Ausrichtung des Schweißdrahts 12 und des Brennerhalses während der Vorschubbewegung des Schweißbrenners 9.

In einer alternativen Ausführungsform dieser Variante kann die Schweißdrahtspitze 12a auch stechend und dabei mit ständigem Kontakt mit der Oberfläche 24a über das Unterblech 23a geführt werden. Mit einer stechenden oder auch drückenden Bewegung der Schweißdrahtspitze 12a über eine Oberfläche wie die des Unterblechs 24, kann ein mögliche Stick-Slip Effekt, der zu einem unkontrollierten Aufheben und wieder Erzeugen eines Kurzschlusses zwischen der Werkstückoberfläche und dem Schweißdraht führen könnte, sicher vermieden werden. Ebenso kann ein mögliches axiales Bewegen des Schweißdrahts 12, verhindert werden, was ebenfalls aufgrund des Stick-Slip Effekts möglich ist. Dieser "Haft-Gleit-Effekt" ist an sich in der Lage, die Funktionssicherheit des Verfahrens bei stechender Führung zu reduzieren oder gar zu gefährden.

Bei der Variante mit der kontaktlosen Führung des Schweißbrenners 9 über die Oberfläche 24a sollte die Bewegungsrichtung des Schweißbrenners 9 mit seinem Schweißdraht 12 hierbei, bezogen auf die Schweißdrahtspitze 12a, parallel und mit konstant geringem Abstand zum angenommenen Verlauf der Oberfläche 24a des Unterblechs 24 in Richtung auf die angenommene Fügelinie zu ausgerichtet sein. Der Draht kommt erst dann wieder mit einem der Werkstücke in Kontakt und ein detektierbarer Kurzschluß entsteht dabei, wenn die Schweißdrahtspitze 12a auf die Fügelinie 21 stößt. Außerdem wird der Schweißdraht 12 durch das Auftreffen auf das Werkstück, hier eine Stirnseite des Oberblechs 23 aus seiner Verfahrbewegung geringfügig in den Schweißbrenner 12 zurückgeschoben, sowie die Antriebsrolle 6c und damit auch die Motorwelle des Motors des vorderen Drahtvorschubs 6b in Rückschubrichtung geringfügig gedreht. Sowohl das Kurzschlußsignal als auch die Drehung der Motorwelle, der Antriebsrolle 6c, der passiven Rolle 6b, des Tachos des Drahtvorschubs oder ein Signal eines Ist-Wert-Gebers zur Überwachung von axialen Drahtbewegungen können jeweils einzeln oder in Kombinationen miteinander gemeinsam zur Detektierung des Erreichens einer Stelle der Fügelinie 21 durch die Schweißdrahtspitze 12a genutzt werden. Eine Drehung der Motorwelle und/oder des Antriebsrads 6c kann insbesondere als Änderung des Motorstroms elektrisch detektiert werden. Eine solche Detektierung führt einerseits dazu, daß die Robotersteuerung die Vorschubbewegung des Roboters 20 sofort stoppt. Andererseits werden dadurch auch die Koordinaten, bezogen auf den TCP, der Schweißdrahtspitze 12a in dieser Kontaktposition in der Robotersteuerung zur nachfolgenden Berechnung abgespeichert. Vorzugsweise kann bei dieser Berechnung auch die Länge des erfolgten Einschubs des Drahts berücksichtigt werden. Bevorzugt ist jedoch, daß die Steuerung der Schweißstromquelle 4 oder des Roboters 20 bereits den Beginn der Verschiebebewegung des Schweißdrahts 12 feststellt und dann die Koordinaten, welche die Schweißdrahtspitze zu diesem Zeitpunkt einnimmt und welche der Robotersteuerung bekannt sind, abspeichert. Diese Koordinaten entsprechen somit einer Stelle der IST-Fügelinie 21.

Nachfolgend kann der Draht wieder auf die gleiche wie zuvor beschriebene Weise zwischen den Rollen geklemmt werden. Ausserdem kann der Roboter 20 den Lichtbogenschweißbrenner von der Fügelinie 21 kollisionsfrei wegführen und dabei den Abstand zu den Werkstücke vergrößern, beispielsweise indem der Lichtbogenschweißbrenner 9 senkrecht von der Oberfläche 24a des Unterblechs 24 abgehoben wird.

Außerdem kann der Schweißdraht 12 mittels des vorderen Drahtvorschubs 6b wieder um die Länge in Vorschubrichtung vorbewegt werden, die er zuvor durch die Kanten- bzw Fügeliniensuche zurückbewegt wurde. Die Schweißdrahtspitze 12a befindet sich dadurch wieder im TCP. Um exakt die gleiche Vorschublänge zu erreichen, die der Rückschublänge entspricht, kann der Elektromotor exakt die Anzahl an Inkrementen in Vorschubrichtung und in einer angetriebenen Vorschubbewegung bewegt werden, die er vom Draht zuvor in umgekehrter Richtung gedreht wurde.

Es kann nun eine zweite Stelle des Ist-Verlaufs der Fügelinie 21 ermittelt werden. Hierzu fährt der Schweißroboter 20 mit dem Lichtbogenschweißbrenner 9 eine weitere Stelle in der Nähe des Soll-Verlaufs der Fügelinie 21 an. Es folgt dann ein Ablauf wie bei der zuvor beschriebenen Ermittlung der ersten Stelle der Fügelinie 21 im Zusammenhang mit den Fig. 14 bis 19. Die Bewegungsbahn hierfür sind lediglich seitlich, in Richtung des SOLL-Verlaufs der Fügelinie, versetzt. Beim Auftreffen der Schweißdrahtspitze 12a auf die Fügelinie 21 entsteht wiederum ein Kontakt mit einem der Fügepartner, hier dem Oberblech 23, was ein Detektionsergebnis zur Bestimmung der Koordinaten einer zweiten Stelle des IST-Verlaufs der Fügelinie 21 darstellt. Außerdem wird hierdurch die Vorschubbewegung des Schweißbrenners 9 gestoppt und die Koordinaten der ermittelten zweiten Stelle des IST-Verlaufs der Fügelinie 21 durch die Robotersteuerung gespeichert. Mit den Koordinaten dieser beiden Stellen ist bereits ein IST-Verlauf der geradlinigen Fügelinie berechenbar bzw eine Korrektur des SOLL-Verlaufs bestimmbar, welche den tatsächlichen Verlauf der Fügelinie wiedergibt. In einer bevorzugten Ausführungsform der Erfindung werden jedoch die Koordinaten von zumindest einer weiteren IST-Stelle der Fügelinie 21 bestimmt.

Diese zumindest dritte Stelle des IST-Verlaufs der Fügelinie 21 erhöht die Genauigkeit des aufgrund von detektierten Stellen ermittelten Verlaufs der Fügelinie 21 und des zu einem nachfolgenden Zeitpunkt abzufahrenden Schweißverfahrwegs des Roboters 20 mit dem Lichtbogenschweißbrenner 9. Wie bei allen anderen bevorzugten Ausführungsformen des erfindungsgemäßen Verfahren auch, können zur Bestimmung eines IST-Verlaufs einer Fügelinie 21 optional noch weitere, also insgesamt vier oder mehr, Stellen der jeweiligen Fügelinie 21 detektiert, deren Koordinaten bestimmt und aus allen ermittelten Koordinaten insgesamt der IST-Verlauf der jeweiligen Fügelinie 21 berechnet werden. Üblicherweise wird sich dabei die Genauigkeit der Übereinstimmung des auf diese Weise bestimmten Verlaufs mit dem tatsächlichen Verlauf der Fügelinie mit steigender Anzahl an ermittelten Stellen der Fügelinie 21 erhöhen.

Nachfolgend wird eine zweite Variante dieses Ausführungsbeispiels mit stechender bzw drückender Führung des Schweißdrahts 12 erläutert. Hierbei werden im wesentlichen nur Unterschiede im Vergleich mit der zuvor erörterten ersten Variante mit stechender bzw drückender Führung erläutert, ansonsten wird Bezug auf die erste Variante genommen. Nachdem das Schweißdrahtende 12b mit einem Anstellwinkel α in Bezug auf eine Senkrechte durch den TCP sowie in Bezug auf die nachfolgende Verfahrrichtung, außerdem mit einem Winkel β quer zur Richtung des nachfolgenden Verfahrwegs, ausgerichtet ist, wird der Lichtbogenschweißbrenner 9 in Richtung auf die Oberfläche 24a des unteren Blechs 24 bzw Fügepartners abgesenkt. Sobald ein Kontakt zwischen der Schweißdrahtsitze 12a und dem Werkstück besteht, kann bei eingeschalteter Kurzschlußerkennung die Zustellbewegung des Roboters 20 sofort gestoppt werden. Nachfolgend wird die Schweißdrahtspitze 12a mit schräg gestelltem Endabschnitt 12b des Schweißdrahts 12 drückend und mit ständigem Kontakt über die Oberfläche 24a des ersten Werkstücks, hier eines Unterblechs 24, geführt. Die Einstellungen der Drahtvorschubeinrichtungen 6b können hierbei jenen entsprechen, wie sie auch bei der zuvor erörterten Ausführungsform mit drückend bzw stechend geführter Schweißdrahtspitze 12a beschrieben sind. Der Schweißdraht 12 kann also mit einem geringem Drehmoment der Antriebsrolle 6c der Drahtvorschubeinrichtung 6b in Vorschubrichtung des Schweißdrahts im Brenner versehen oder dort lose angeordnet sein. Hierdurch kann ein zumindest weitestgehender ununterbrochener Kontakt der Drahtspitze 12a mit dem Unterblech 24 auch bei Oberflächenungenauigkeiten sichergestellt werden. Außerdem kann dies auch dem "Stick-Slip"-Effekt entgegenwirken. Gelangt die Drahtspitze 12a dann an eine Stelle der Fügelinie 21, so stößt die Drahtspitze 12a gegen das obenliegende Werkstück, hier das Oberblech 23. Der Schweißdraht 12 wird aufgrund des Kontakts mit diesem Hindernis ein Stück weit in den Schweißbrenner 9 zurückgeschoben, die Antriebsrolle 6c dadurch in Einschubrichtung gedreht und damit auch die drehfest mit der Antriebsrolle verbundene Motorwelle um einen bestimmten Drehwinkel in Einschubrichtung rotiert. Zumindest eine dieser Bewegungen kann detektiert und als Detektionsergebnis für ein Auftreffen der Schweißdrahtspitze 12a auf die Fügelinie 21 interpretiert werden. Aufgrund eines entsprechenden Detektionssignals stoppt die Robotersteuerung die Bewegung des Roboters 20 und speichert die Koordinaten der Kontaktstelle mit der Fügelinie 21 ab.

Nachfolgend kann der Schweißbrenner 9 von der Kontaktstelle weggeführt, insbesondere abgehoben, die Schweißdrahtspitze 12a wieder in den TCP vorgeschoben und der Schweißbrenner 9 zu einem anderen Startpunkt über dem Unterblech 24 verfahren werden. Von hier aus kann dann ein zwar örtlich versetzter, aber im Verfahrensablauf bezüglich des ersten Zyklus zur Bestimmung einer ersten Stelle der Fügelinie 21 identischer zweiter Zyklus folgen, mit dem durch eine drückende bzw stechende Führung der Schweißdrahtspitze 12a über das Unterblech 24 bei ständigem Kontakt mit dem Unterblech 24 eine zweite Stelle der Fügelinie 21 detektiert wird. Nachfolgend kann dies mit wiederum einem örtlich versetzten, inhaltlich aber identischen, dritten Verfahrenszyklus zur Bestimmung einer sich von den ersten beiden Stellen unterscheidenden dritten Stelle der Fügelinie wiederholt werden. Wie bei allen anderen erfindungsgemäßen Ausführungsformen des Verfahrens auch, können auch hier, je nach Genauigkeitsbedarf und angenommenem SOLL-Verlauf der Fügelinie, entweder keine weiteren oder beliebig viele Verfahrenszyklen zur Bestimmung weiterer Stellen der Fügelinie folgen. Grundsätzlich ist jedoch nur die Ermittlung von lediglich einer Stelle der Fügelinie erforderlich, um bereits eine Aussage zu einer Korrektur des der Robotersteuerung bekannten SOLL-Verlaufs der Fügelinie 21 treffen zu können.

Bei allen bevorzugten erfindungsgemäßen Ausführungsformen kann nach Detektion der jeweils vorgesehenen Anzahl, die unterschiedlich sein kann, von Detektionsstellen der jeweiligen Fügelinie 21 deren IST-Verlauf durch die Robotersteuerung bestimmt werden. Dieser berechnete IST-Verlauf kann somit eine Interpolation an den tatsächlich vorhandenen Verlauf zwischen den jeweils detektierten Stellen sein. Hierbei kann insbesondere eine lineare Interpolation Anwendung finden. Aber, auch in Abhängigkeit des bekannten Sollverlaufs, kann eine andere bekannte Interpolation als eine lineare Interpolation stattfinden. Der ermittelte Verlauf der Fügelinie kann wiederum zur Bestimmung des Schweißwegs dienen.

In weiteren bevorzugten Ausführungsformen der Erfindung können mit dieser auch Fugen und andere Nähte, beispielsweise eine Kehlnaht bzw Stellen der Kehlnaht detektiert werden. Hierzu eignen sich insbesondere Ausführungsformen der Erfindung, bei denen in Bewegungsrichtung des Schweißbrenners 9, dieser mit der Schweißdrahtspitze 12a vorauseilend geführt wird. Besonders geeignet sind somit Verfahrensformen, bei denen die Schweißdrahtspitze 12a stechend und mit entweder konstantem Kontakt oder konstantem Nicht-Kontakt über die Oberfläche des einen Fügepartners geführt wird, bis die Schweißdrahtspitze 12a auf den anderen Fügepartner auftrifft. Das jeweilige Verfahren kann im Detail ablaufen, wie es im Zusammenhang mit zwei parallel aufeinander gelegten Blechen in den Figuren 14 bis 19 gezeigt und vorstehend beschrieben ist. Hinsichtlich einer Kehlnaht unterscheiden sich die dort gezeigten Verfahren lediglich dadurch, daß die Fügepartner nicht zwei zueinander parallel ausgerichtete Bauteile sondern ein mit seiner Oberfläche senkrecht oder in etwa senkrecht zur Oberfläche des anderen Bauteils ausgerichtetes Bauteil aufweist. Es wird deshalb für die erfindungsgemäß bevorzugt anzuwenden Verfahren für Kehlnähte auf die vorstehenden Ausführungen zu Verfahren mit stechend geführtem Schweißdraht Bezug genommen und diese ausdrücklich auch als Inhalt für die Bearbeitung von Kehlnähten erklärt.

In weiteren bevorzugten Ausführungsformen der Erfindung können zumindest zwei Detektionsverfahrschritte zur Ermittlung des Verlaufs einer Fügelinie vorgesehen sein, wobei die beiden Detektionsverfahrschritte zu unterschiedlichen erfindungsgemäßen Ausführungsformen gehören. So kann beispielsweise zumindest einer der Detektionsverfahrschritte mit einer stechenden Führung des Schweißdrahts und zumindest ein anderer Detektionsverfahrschritt mit einer schleppenden Führung des Schweißdrahts vorgesehen sein. Bei einer solchen Lösung mit abwechselnd schleppender und stechender Führung des Schweißdrahts können die insgesamt erforderlichen Wege - und damit auch die Taktzeiten für solche bevorzugten erfindungsgemäßen Verfahren - vergleichsweise kurz sein. Der jeweils nachfolgende Detektionsverfahrschritt kann in der Nähe der Stelle beginnen, an welcher der vorausgegangene Detektionsverfahrschritt geendet hat. Es können somit auch Detektionsverfahrschritte vorgesehen sein, bei denen zumindest einer einen Verfahrweg über das Oberblech bis zur Fügelinie und zumindest ein anderer einen Verfahrweg über das Unterblech bis zur Fügelinie aufweist. Schließlich können sich die Verfahrwege eines bevorzugten erfindungsgemäßen Verfahrens auch noch dadurch voneinander unterscheiden, daß zumindest ein Detektionsverfahrschritt beim Verfahren über die jeweilige Oberfläche eines Werkstücks entweder einen ständigen Kontakt mit der jeweiligen Oberfläche und ein Verfahrweg eines anderen Detektionsverfahrschritt des gleichen Verfahrens einen ständigen Nicht-Kontakt mit der Oberflächen des überfahrenen Werkstücks aufweist. Diese Variationen können sowohl einzeln als auch in beliebiger Kombination miteinander vorgesehen sein.

Schließlich kann in einer weiteren nicht erfindungsgemäßen Ausführungsform das Verfahren auch zur Detektion von bereits erzeugten Schweißnähten dienen. Dies kann beispielsweise zur Qualitätskontrolle vorgesehen sein. Hierbei wird mittels des Schweißdrahts anstelle einer Fügelinie zwischen zwei Werkstücken eine dort bereits erzeugte Schweißnaht detektiert.

### Bezugszeichenliste

| | | | |
|---|---|---|---|
| 1 | Lichtbogenschweißanlage | 18 | Kürzungswerkzeug |
| 2 | Werkstück | 20 | Schweißroboter |
| 2a | Oberfläche | 20a | Endmanipulator |
| 3 | Werkstück | 21 | Fügelinie/Fügekante |
| 4 | Schweißstromquelle | 23 | Oberblech |
| 5 | Schweißdrahtvorrat | 23a | Oberfläche |
| 6 | Drahtvorschubeinrichtung | 24 | Unterblech |
| 6a | hinterer Drahtvorschub | 24a | Oberfläche |
| 6b | vorderer Drahtvorschub | 25 | Senkrechte |
| 6c | angetriebene Rolle | 27 | Begrenzungskante |
| 6d | passive Rolle | 30 | erster Detektionsverfahrschritt |
| 7 | Schlauchpaket | 31 | zweiter Detektionsverfahrschritt |
| 8 | Schutzgasversorgung | 31a | Startstelle |
| 9 | Lichtbogenschweißbrenner | 31b | Endpunkt |
| 9a | Brennerhals | 32 | dritter Detektionsverfahrschritt |
| 9a | Lichtbogenschweißbrennerende | 32a | Startpunkt |
| 10 | Polkabel | | |
| 11 | Polkabel | | |
| 12 | Schweißdraht | | |
| 12a | Schweißdrahtspitze | | |
| 12b | Schweißdrahtende | | |
| 12c | Schweißdrahtlängsachse | | |
| 15 | Schweißstromquellensteuerung | | |
| 16 | Bedieneinrichtung | | |
| 17 | Reinigungsstation | | |

## Patentansprüche

1. Verfahren zum Bestimmen eines von einem Mehrachsenroboter abzufahrenden Schweißwegs für einen nachfolgenden Lichtbogenschweißvorgang mittels einer Lichtbogenschweißeinrichtung, bei dem zwischen zumindest zwei Werkstücken entlang einer Fügelinie zwischen den zumindest zwei Werkstücken eine Schweißnaht dadurch erzeugt werden soll, daß ein Lichtbogenschweißbrenner der Lichtbogenschweißeinrichtung mittels eines im dreidimensionalen Raum beweglichen Mehrachsenroboters entlang eines vorbestimmten Schweißwegs entlang einer Fügelinie geführt wird um hierbei die Schweißnaht zu erzeugen, wobei der zur nachfolgenden Ausführung des Lichtbogenschweißvorgangs vorgesehene und vom Mehrachsenroboter geführte Lichtbogenschweißbrenner in zumindest einem Detektionsverfahrschritt automatisiert über zumindest eines der Werkstücke geführt wird, um Informationen über einen Ist-Verlauf der Fügelinie zu ermitteln, der Schweißbrenner mit seinem Schweißdraht in zumindest dem einem Detektionsverfahrschritt von einer Ausgangsstelle der Oberfläche eines der Werkstücke bis zur Fügelinie für die vorgesehene Schweißnaht nicht-parallel zu einem Soll-Verlauf der Fügelinie mit - insbesondere bezogen auf die Schweißdrahtlängsachse - durchgehend gleicher relativer axialer Position der Schweißdrahtspitze zum Lichtbogenschweißbrenner über die Oberfläche des Werkstücks vom Mehrachsenroboter geführt wird, **dadurch gekennzeichnet, dass** durch Detektion einer Änderung der axialen Position der Schweißdrahtspitze zum Lichtbogenschweißbrenner auf eine Stelle der IST-Fügelinie geschlossen wird, die ermittelten Koordinaten der Stelle der IST-Fügelinie gespeichert werden und zur Korrektur des Verlaufs oder zur Neuberechnung des nachfolgend auszuführenden Schweißwegs verwendet werden.

2. Verfahren nach Anspruch 1, **dadurch gekennzeichnet, daß** die Schweißdrahtspitze von der Ausgangsstelle bis zur Fügelinie mit durchgehend konstant gleichen Kontaktverhältnissen zwischen der Schweißdrahtspitze und dem Werkstück geführt wird.

3. Verfahren nach einem der beiden vorhergehenden Ansprüche, **gekennzeichnet durch** zumindest ein Detektionsmittel, mit welchem während des Führens der Schweißdrahtspitze über die Oberfläche des Werkstücks eine Bewegung des Schweißdrahts entlang seiner Längsachse festgestellt und aufgrund eines Signals des zumindest einen Detektionsmittels auf ein Erreichen der Fügelinie durch die Schweißdrahtspitze geschlossen wird.

4. Verfahren nach einem der vorhergehenden Ansprüche, **dadurch gekennzeichnet, daß** aufgrund einer Bewegung des Schweißdrahts in seiner axialen Richtung, welche zu einer Bewegung, insbesondere einer Rotationsbewegung, einer Komponente, insbesondere einer Drahtvorschubeinrichtung, der Lichtbogenschweißeinrichtung führt, diese Bewegung der Komponente detektiert wird und dadurch auf eine Stelle der Fügelinie geschlossen wird.

5. Verfahren nach einem der vorhergehenden Ansprüche, **dadurch gekennzeichnet, daß** aufgrund einer Bewegung des Schweißdrahts in seiner axialen Richtung und mittels einer dadurch bedingten und detektierten Bewegung - insbesondere Rotationsbewegung - einer Drahtvorschubrolle, oder eines Bestandteils eines Antriebsmotors oder mittels eines Drehbewegungssensors des Antriebsmotors der Drahtvorschubeinrichtung oder eines Tachometers einer Drahtvorschubeinrichtung auf eine Stelle der Fügelinie geschlossen wird.

6. Verfahren nach einem der vorhergehenden Ansprüche, **dadurch gekennzeichnet, daß** aufgrund einer axialen Bewegung des Schweißdrahts in Richtung aus dem Lichtbogenschweißbrenner heraus oder in ihn hinein, auf eine Stelle der Fügelinie geschlossen wird.

7. Verfahren nach einem der vorhergehenden Ansprüche **dadurch gekennzeichnet, daß** der Schweißdraht während der Verfahrbewegung zwischen der Ausgangsstelle und der Fügelinie bei ununterbrochen vorhandenem Kontakt zwischen dem jeweiligen Werkstück und der Schweißdrahtspitze, mittels einer Drahtvorschubeinrichtung mit einer axialen Kraft in Drahtvorschubrichtung beaufschlagt oder in der Drahtvorschubrichtung lose angeordnet oder mittels eines von der Drahtvorschubeinrichtung ausgeübten geringen Drehmoments in Position gehalten ist.

8. Verfahren nach einem der vorhergehenden Ansprüche, **dadurch gekennzeichnet, daß** der Schweißdraht während der Verfahrbewegung zwischen der Ausgangsstelle und der Fügelinie in einer Drahtvorschubeinrichtung frei beweglich angeordnet ist.

9. Verfahren nach einem der vorhergehenden Ansprüche, **dadurch gekennzeichnet, daß** beim Führen der Schweißdrahtspitze über die Oberfläche des Werkstücks hin zur Fügelinie ein aus dem Lichtbogenschweißbrenner herausragendes Endstück des Schweißdrahts bezüglich einer Senkrechten zur Oberfläche des Werkstücks um einen Winkel aus einem Bereich 0° < α ≤ 75°, bevorzugt aus einem Bereich 20° ≤ α ≤ 50°, geneigt ist und die Neigung entweder in die vorgesehene Bewegungsrichtung oder entgegen der vorgesehen Bewegungsrichtung des Schweißdrahts bei dessen Verfahrbewegung über die Oberfläche des Werkstücks vorgenommen wird.

10. Verfahren nach einem der vorhergehenden Ansprüche, **dadurch gekennzeichnet**,_daß beim Führen der Schweißdrahtspitze über die Oberfläche des Werkstücks hin zur Fügelinie ein aus dem Lichtbogenschweißbrenner herausragendes Endstück des Schweißdrahts bezüglich einer Senkrechten zur Oberfläche des Werkstücks sowie in eine Richtung zumindest im wesentlichen quer zur vorgesehenen Verfahrrichtung, um einen Winkel β aus einem Bereich 0° ≤ β ≤ 75°, bevorzugt aus einem Bereich 0° ≤ β ≤ 50°, besonders bevorzugt Bereich 0° ≤ β ≤ 30°, geneigt ist.

11. Verfahren nach einem der vorhergehenden Ansprüche, **dadurch gekennzeichnet, daß** die Schweißdrahtspitze in dem zumindest einen Detektionsverfahrschritt von der Ausgangsstelle bis zur Fügelinie zumindest im wesentlichen konstant und mit ununterbrochen vorhandenem Kontakt zwischen der Schweißdrahtspitze und der Oberfläche des Werkstücks zumindest im wesentlichen nicht-parallel zu einem Soll-Verlauf der Fügelinie geführt wird.

12. Verfahren nach einem der vorhergehenden Ansprüche, **dadurch gekennzeichnet, daß** die Schweißdrahtspitze in dem zumindest einen Detektionsverfahrschritt von der Ausgangsstelle bis zur Fügelinie zumindest im wesentlichen konstant und mit ununterbrochen nicht vorhandenem Kontakt zwischen dem Schweißdraht und der Oberfläche des Werkstücks zumindest im wesentlichen nicht-parallel zu einem Soll-Verlauf der Fügelinie geführt wird.

13. Verfahren nach einem der vorhergehenden Ansprüche, **dadurch gekennzeichnet, daß** zur Ermittlung von Informationen eines Verlaufs der Fügelinie des vorgesehenen Schweißwegs zumindest zwei unterschiedliche Detektionsverfahrschritte durchgeführt werden, deren Wege jeweils nicht-parallel zum Soll-Verlauf des Schweißwegs verlaufen.

14. Verfahren nach einem der vorhergehenden Ansprüche, **dadurch gekennzeichnet, daß** vor der Ausführung eines Detektionsverfahrschritts eine Referenzierung der Schweißdrahtspitze in einen Tool-Center-Point (TCP) vorgenommen und hierfür der Schweißdraht in einer Drahtvorschubeinrichtung geklemmt wird, wobei nachfolgend während der Ausführung eines Verfahrwegs des zumindest einen Detektionsverfahrschritts von der Ausgangsstelle zur Fügelinie der Schweißdraht in der Drahtvorschubeinrichtung die Klemmung aufgehoben und der Schweißdraht durch äussere Einwirkung oder durch Einwirken der Drahtvorschubeinrichtung auf den Schweißdraht längsverschiebbar angeordnet ist.

15. Verfahren nach einem der vorhergehenden Ansprüche, **dadurch gekennzeichnet, daß** eine Steuerung der Lichtbogenschweißeinrichtung mittels eines Sensormittels den Schweißdraht auf eine axiale Bewegung während des Abfahrens des zumindest einen Wegs des Detektionsverfahrschritts hinsichtlich einer Verschiebegeschwindigkeit des Schweißdrahts überwacht, um erst bei einem Überschreiten eines Schwellwerts der Verschiebegeschwindigkeit des Schweißdrahts auf eine Stelle des Ist-Verlaufs der Fügelinie zu schließen.

16. Verfahren nach einem der vorhergehenden Ansprüche, **dadurch gekennzeichnet, daß** eine Steuerung der Lichtbogenschweißeinrichtung den Motor oder Rollen einer Drahtvorschubeinrichtung während des Abfahrens des zumindest einen Wegs des Detektionsverfahrschritts hinsichtlich einer Änderung der Verschiebelänge des Schweißdrahts in der Drahtvorschubeinrichtung überwacht, um erst bei einem Überschreiten eines Schwellwerts einer Verschiebelänge des Schweißdrahts auf eine Stelle des Ist-Verlaufs der Fügelinie zu schließen.

17. Verfahren nach Anspruch 16, **dadurch gekennzeichnet, daß** ein Überschreiten des Schwellwerts der Verschiebelänge des Schweißdrahts innerhalb eines bestimmten Zeitintervalls detektiert wird.

18. Verfahren nach einem der vorhergehenden Ansprüche, **dadurch gekennzeichnet, daß** eine Robotersteuerung bei Detektion einer Stelle des Ist-Verlaufs der Fügelinie ermittelte Koordinaten der Stelle zur Korrektur des Verlaufs des nachfolgend auszuführenden Schweißwegs abspeichert und zur Berechnung des Schweißwegs verwendet.

19. Verfahren nach einem der vorhergehenden Ansprüche, **gekennzeichnet durch** einen Teach-In Schritt, der vor der Ausführung eines Detektionsverfahrschritts ausgeführt und ein Kürzen des aus dem Lichtbogenschweißbrenner herausragenden Drahtendes umfaßt, wobei ein hierbei vorgesehenes Kürzungswerkzeug sich relativ zum Schweißdraht an einer Referenzstelle des Schweißbrenners, insbesondere einem Tool-Center-Point (TCP) befindet.

20. Verfahren nach Anspruch 19, **dadurch gekennzeichnet, daß** nach dem Kürzen des Schweißdrahts mit dessen Drahtende der zumindest eine Weg des zumindest einen vorgesehenen Detektionsverfahrschritts mit konstant eingehaltenen Kontaktverhältnisse der Drahtspitze über das zumindest einen Werkstück manuell oder gesteuert geführt und dabei die Koordinaten des vorgesehenen Wegs des Detektionsverfahrschritts in der Steuerung für ein nachfolgendes automatisiertes Abfahren des Wegs abgespeichert werden.

## Claims

1. . Method for determining a welding path to be traversed by a multi-axis robot for a subsequent arc welding process by means of an arc welding device, in which a weld seam is to be produced between at least two workpieces along a joining line between the at least two workpieces by means of the fact that an arc welding torch of the arc welding device is guided along a predetermined welding path along a joining line by means of a multi-axis robot movable in three-dimensional space in order to produce the weld seam, wherein the arc welding torch provided for the subsequent execution of the arc welding process and guided by the multi-axis robot is automatically guided over at least one of the workpieces in at least one detection traversing step in order to determine information about an actual course of the joining line, the welding torch with its welding wire is guided by the multi-axis robot in at least the one detection step from a starting point of the surface of one of the workpieces to the joining line for the intended weld seam non-parallel to a desired course of the joining line with - in particular with respect to the longitudinal axis of the welding wire - continuously the same relative axial position of the welding wire tip to the arc welding torch over the surface of the workpiece, **characterized in that** by detecting a change in the axial position of the welding wire tip relative to the arc welding torch, a position of the ACTUAL joining line is inferred, the determined coordinates of the position of the ACTUAL joining line are stored and used to correct the course or to recalculate the welding path to be subsequently executed.

2. . Method according to claim 1, **characterized in that** the welding wire tip is guided from the starting point to the joining line with constant contact ratios between the welding wire tip and the workpiece.

3. . Method according to one of the two preceding claims, **characterized by** at least one detection means, with which a movement of the welding wire along its longitudinal axis is detected during the guidance of the welding wire tip over the surface of the workpiece and a conclusion is drawn on the basis of a signal from the at least one detection means that the welding wire tip has reached the joining line.

4. . Method according to one of the preceding claims, **characterized in that**, on the basis of a movement of the welding wire in its axial direction, which leads to a movement, in particular a rotational movement, of a component, in particular a wire feed device, of the arc welding device, this movement of the component is detected and, as a result, a position of the joining line is inferred.

5. . Method according to one of the preceding claims, **characterized in that** a position of the joining line is inferred on the basis of a movement of the welding wire in its axial direction and by means of a movement - in particular a rotational movement - of a wire feed roller caused thereby and detected, or of a component of a drive motor or by means of a rotary movement sensor of the drive motor of the wire feed device or of a tachometer of a wire feed device.

6. . Method according to one of the preceding claims, **characterized in that** a position of the joining line is inferred on the basis of an axial movement of the welding wire in the direction out of or into the arc welding torch.

7. . Method according to one of the preceding claims, **characterized in that**, during the traversing movement between the starting point and the joining line, the welding wire, with uninterrupted contact between the respective workpiece and the welding wire tip, is subjected to an axial force in the wire feed direction by means of a wire feed device or is loosely arranged in the wire feed direction or is held in position by means of a low torque exerted by the wire feed device.

8. . Method according to one of the preceding claims, **characterized in that** the welding wire is freely movably arranged in a wire feed device during the traversing movement between the starting point and the joining line.

9. . Method according to one of the preceding claims, **characterized in that**, when the welding wire tip is guided over the surface of the workpiece towards the joining line, an end piece of the welding wire projecting from the arc welding torch is inclined with respect to a perpendicular to the surface of the workpiece by an angle from a range of 0° < α≤ 75°, preferably from a range of 20°≤ α≤ 50°, and the inclination is made either in the intended direction of movement or against the intended direction of movement of the welding wire during its movement over the surface of the workpiece.

10. . Method according to one of the preceding claims, **characterized in that**, when guiding the welding wire tip over the surface of the workpiece towards the joining line, an end piece of the welding wire projecting from the arc welding torch is inclined with respect to a perpendicular to the surface of the workpiece and in a direction at least substantially transverse to the intended direction of movement by an angle ß from a range of 0° ≤ß≤ 75°, preferably from a range of 0°≤ ß≤ 50°, particularly preferably from a range of 0° ≤ß≤ 30°.

11. . Method according to one of the preceding claims, **characterized in that** the welding wire tip is guided in the at least one detection traversing step from the starting point to the joining line at least substantially constantly and with uninterrupted contact between the welding wire tip and the surface of the workpiece at least substantially non-parallel to a desired course of the joining line.

12. . Method according to one of the preceding claims, **characterized in that** the welding wire tip is guided in the at least one detection traversing step from the starting point to the joining line at least substantially constantly and with uninterrupted non-existent contact between the welding wire and the surface of the workpiece at least substantially non-parallel to a desired course of the joining line.

13. . Method according to one of the preceding claims, **characterized in that** at least two different detection traversing steps are carried out to determine information on a course of the joining line of the intended welding path, the paths of which traversing steps are each non-parallel to the desired course of the welding path.

14. . Method according to one of the preceding claims, **characterized in that**, before a detection traversing step is carried out, the welding wire tip is referenced in a tool center point (TCP) and, for this purpose, the welding wire is clamped in a wire feed device, wherein subsequently, during the execution of a travel path of the at least one detection traversing step from the starting point to the joining line, the welding wire is unclamped in the wire feed device and the welding wire is arranged to be longitudinally displaceable by external action or by action of the wire feed device on the welding wire.

15. . Method according to one of the preceding claims, **characterized in that** a control of the arc welding device monitors the welding wire by means of a sensor means for an axial movement during the traversing of the at least one path of the detection traversing step with respect to a displacement speed of the welding wire, in order to conclude a position of the actual course of the joining line only when a threshold value of the displacement speed of the welding wire is exceeded.

16. . Method according to one of the preceding claims, **characterized in that** a controller of the arc welding device monitors the motor or rollers of a wire feed device during the travel of the at least one path of the detection traversing step with regard to a change in the displacement length of the welding wire in the wire feed device, in order to draw a conclusion about a point of the actual course of the joining line only when a threshold value of a displacement length of the welding wire is exceeded.

17. . Method according to claim 16, **characterized in that** an exceeding of the threshold value of the displacement length of the welding wire is detected within a specific time interval.

18. . Method according to one of the preceding claims, **characterized in that** a robot controller, upon detection of a location of the actual course of the joining line, stores coordinates of the location determined for correcting the course of the welding path to be subsequently executed and uses them for calculating the welding path.

19. . Method according to one of the preceding claims, **characterized by** a teach-in step which is carried out before the execution of a detection traversing step and comprises a shortening of the wire end projecting from the arc welding torch, a shortening tool provided for this purpose being located relative to the welding wire at a reference point of the welding torch, in particular a tool center point (TCP).

20. . Method according to claim 19, **characterized in that**, after shortening the welding wire with its wire end, the at least one path of the at least one intended detection traversing step with constantly maintained contact ratios of the wire tip is guided manually or under control over the at least one workpiece, and the coordinates of the intended path of the detection traversing step are stored in the control system for subsequent automated traversing of the path.

## Revendications

1. Procédé de définition d'un trajet de soudage à parcourir par un robot à axes multiples pour une opération de soudage à l'arc ultérieure au moyen d'un dispositif de soudage à l'arc, où un cordon de soudure doit être ainsi généré entre au moins deux pièces à usiner le long d'une ligne d'assemblage entre les au moins deux pièces à usiner en ce qu'un chalumeau de soudage à l'arc du dispositif de soudage à l'arc est guidé au moyen d'un robot à axes multiples mobile dans l'espace tridimensionnel le long d'un trajet de soudage prédéfini le long d'une ligne d'assemblage afin de générer dans ce cadre le cordon de soudure, dans lequel le chalumeau de soudage à l'arc prévu pour l'exécution ultérieurement de l'opération de soudage à l'arc et guidé par le robot à axes multiples est guidé de manière automatisée dans au moins une étape de déplacement de détection sur au moins une des pièces à usiner pour déterminer des informations sur un tracé réel de la ligne d'assemblage, le chalumeau avec son fil de soudage est guidé par le robot à axes multiples dans l'au moins une étape de déplacement de détection depuis un point de départ de la surface d'une des pièces à usiner jusqu'à la ligne d'assemblage pour le cordon de soudure prévu de manière non-parallèle à un tracé théorique de la ligne d'assemblage avec - en particulier par rapport à l'axe longitudinal de fil de soudage - une position axiale relative constante de la pointe de fil de soudage par rapport au chalumeau à arc électrique sur la surface de la pièce à usiner, **caractérisé en ce que** la détection d'une modification de la position axiale de la pointe de fil de soudage par rapport au chalumeau de soudage à l'arc permet de déduire un emplacement de la ligne d'assemblage réelle, les coordonnées déterminées de l'emplacement de la ligne d'assemblage réelle sont stockées et utilisées pour corriger le tracé ou pour recalculer le trajet de soudage à exécuter par la suite.

2. Procédé selon la revendication 1, **caractérisé en ce que** la pointe de fil de soudage est guidée depuis le point de départ jusqu'à la ligne d'assemblage avec des rapports de contact identiques et constants entre la pointe de fil de soudage et la pièce à usiner.

3. Procédé selon l'une quelconque des deux revendications précédentes, **caractérisé par** au moins un moyen de détection, qui permet, lors du guidage de la pointe de fil de soudage sur la surface de la pièce à usiner, de relever un
déplacement du fil de soudage le long de son axe longitudinal et, sur la base d'un signal de l'au moins un moyen de détection, de déduire lorsque la ligne d'assemblage est atteinte par la pointe de fil de soudage.

4. Procédé selon l'une quelconque des revendications précédentes, **caractérisé en ce qu'**en raison d'un déplacement du fil de soudage dans sa direction axiale, qui entraîne un déplacement, en particulier un déplacement par rotation, d'un composant, en particulier d'un dispositif d'avance de fil, du dispositif de soudage à l'arc, ce déplacement du composant est détecté et permet de déduire ainsi un emplacement de la ligne d'assemblage.

5. Procédé selon l'une quelconque des revendications précédentes, **caractérisé en ce qu'**en raison d'un déplacement du fil de soudage dans sa direction axiale et au moyen d'un déplacement - en particulier d'un déplacement par rotation - qui en résulte et qui est détecté, d'un rouleau d'avance de fil, ou d'un élément d'un moteur d'entraînement ou au moyen d'un capteur de déplacement par rotation du moteur d'entraînement du dispositif d'avance de fil ou d'un tachymètre d'un dispositif d'avance de fil, un emplacement de la ligne d'assemblage est déduit.

6. Procédé selon l'une quelconque des revendications précédentes, **caractérisé en ce qu'**en raison d'un déplacement axial du fil de soudage dans la direction de sortie ou d'entrée du chalumeau de soudage à l'arc, un emplacement de la ligne d'assemblage est déduit.

7. Procédé selon l'une quelconque des revendications précédentes, **caractérisé en ce que** pendant le déplacement entre l'emplacement de départ et la ligne d'assemblage, le fil de soudage est soumis à l'action d'une force axiale dans la direction d'avance de fil au moyen d'un dispositif d'avance de fil lorsqu'un contact continu entre la pièce à usiner respective et la pointe de fil de soudage est présent ou est disposé de manière lâche dans la direction d'avance de fil ou est maintenu en position au moyen d'un faible couple de rotation exercé par le dispositif d'avance du fil.

8. Procédé selon l'une quelconque des revendications précédentes, **caractérisé en ce que** le fil de soudage est disposé de manière librement mobile pendant le déplacement entre l'emplacement de départ et la ligne d'assemblage dans un dispositif d'avance de fil.

9. Procédé selon l'une quelconque des revendications précédentes, **caractérisé en ce que**, lors du guidage de la pointe de fil de soudage sur la surface de la pièce à usiner vers la ligne d'assemblage, un embout du fil de soudage faisant saillie du chalumeau de soudage à l'arc par rapport à une perpendiculaire à la surface de la pièce à usiner est incliné selon un angle issu d'une plage 0° < α ≤ 75°, de préférence d'une plage 20° ≤ α ≤ 50°, et l'inclinaison est effectuée soit dans la direction de déplacement prévue, soit dans le sens opposé à la direction de déplacement prévue du fil de soudage lors de son déplacement sur la surface de la pièce à usiner.

10. Procédé selon l'une quelconque des revendications précédentes, **caractérisé en ce que**, lors du guidage de la pointe de fil de soudage sur la surface de la pièce à usiner vers la ligne d'assemblage, un embout du fil de soudage faisant saillie du chalumeau de soudage à l'arc par rapport à une perpendiculaire à la surface de la pièce à usiner ainsi que dans une direction au moins sensiblement transversale à la direction de déplacement prévue est incliné selon un angle β issu d'une plage 0° ≤ β ≤ 75°, de préférence issu d'une plage 0° ≤ β ≤ 50°, de manière particulièrement préférée d'une plage 0° ≤ β ≤ 30°.

11. Procédé selon l'une quelconque des revendications précédentes, **caractérisé en ce que** la pointe de fil de soudage est guidée, dans l'au moins une étape de déplacement de détection depuis l'emplacement de départ jusqu'à la ligne d'assemblage, au moins sensiblement de manière non-parallèle à un tracé théorique de la ligne d'assemblage de manière au moins sensiblement constante et avec un contact ininterrompu existant entre la pointe de fil de soudage et la surface de la pièce à usiner .

12. Procédé selon l'une quelconque des revendications précédentes, **caractérisé en ce que** la pointe de fil de soudage est guidée, dans l'au moins une étape de déplacement de détection depuis l'emplacement de départ jusqu'à la ligne d'assemblage, de manière au moins sensiblement non-parallèle à un tracé théorique de la ligne d'assemblage de manière au moins sensiblement constante et avec un contact ininterrompu non présent entre le fil de soudage et la surface de la pièce à usiner.

13. Procédé selon l'une quelconque des revendications précédentes, **caractérisé en ce que**, pour déterminer des informations d'un tracé de la ligne d'assemblage du trajet de soudage prévu, au moins deux étapes de déplacement de détection différentes sont effectuées, dont les trajets s'étendent respectivement de manière non-parallèle au tracé théorique du trajet de soudage.

14. Procédé selon l'une quelconque des revendications précédentes, **caractérisé en ce qu'**avant l'exécution d'une étape de déplacement de détection, un référencement de la pointe de fil de soudage dans un Tool-Center-Point (TCP) est réalisé et, pour cela, le fil de soudage est serré dans un dispositif d'avance de fil serré, dans lequel le serrage est ensuite levé pendant l'exécution d'un trajet de déplacement de l'au moins une étape de déplacement de détection depuis le point de départ vers la ligne d'assemblage du fil de soudage dans le dispositif d'avance de fil et le fil de soudage est disposé de manière à pouvoir coulisser longitudinalement par une action extérieure ou par l'action du dispositif d'avance de fil sur le fil de soudage.

15. Procédé selon l'une quelconque des revendications précédentes, **caractérisé en ce qu'**une commande du dispositif de soudage à l'arc au moyen d'un moyen de capteur surveille une vitesse de déplacement du fil de soudage sur un déplacement axial pendant le parcours de l'au moins un trajet de l'étape de déplacement de détection afin de déduire un emplacement du tracé réel de la ligne d'assemblage qu'en cas de dépassement d'une valeur de seuil de la vitesse de coulissement du fil de soudage.

16. Procédé selon l'une quelconque des revendications précédentes, **caractérisé en ce qu'**une commande du dispositif de soudage à l'arc surveille le moteur ou des rouleaux d'un dispositif d'avance de fil pendant le parcours de l'au moins un trajet de l'étape de déplacement de détection en ce qui concerne une modification de la longueur de coulissement du fil de soudage dans le dispositif d'avance de fil, pour déduire un emplacement du tracé réel de la ligne d'assemblage qu'en cas de dépassement d'une valeur de seuil d'une longueur de coulissement du fil de soudage.

17. Procédé selon la revendication 16, **caractérisé en ce qu'**un dépassement de la valeur de seuil de la longueur de coulissement du fil de soudage est détecté dans un intervalle de temps donné.

18. Procédé selon l'une quelconque des revendications précédentes, **caractérisé en ce qu'**une commande de robot sauvegarde des coordonnées de l'emplacement détectées lors de la détection d'un emplacement du tracé réel de la ligne d'assemblage pour la correction du tracé du trajet de soudage à exécuter ultérieurement et les utilise pour le calcul du trajet de soudage.

19. Procédé selon l'une quelconque des revendications précédentes **caractérisé par** une étape d'apprentissage qui est exécutée avant l'exécution d'une étape de déplacement de détection et qui comprend un raccourcissement de l'extrémité du fil faisant saillie du chalumeau de soudage à l'arc, dans lequel un outil de raccourcissement prévu ici se trouve par rapport au fil de soudage sur un emplacement de référence du chalumeau de soudage, en particulier sur un Tool-Center-Point (TCP).

20. Procédé selon la revendication 19, **caractérisé en ce qu'**après le raccourcissement du fil de soudage avec son extrémité de fil, l'au moins un trajet de l'au moins une étape de déplacement de détection prévue est guidé manuellement ou de manière commandée sur l'au moins une pièce à usiner avec des rapports de contact constamment respectés de la pointe de fil de soudage et les coordonnées du trajet prévu de l'étape de déplacement de détection sont alors sauvegardées dans la commande pour un parcours automatisé ultérieur du trajet.
